# EUROPÄISCHE PATENTANMELDUNG

(11) **EP 2 293 096 A2**
(43) Veröffentlichungstag der Anmeldung: **09.03.2011**
(21) Anmeldenummer: 10172186.8
(22) Anmeldetag: 06.08.2010
(51) Int. Cl.: G01S 7/288

(54) **Verfahren und Vorrichtung zum Bereitstellen eines Reflexionssignals**

(30) Priorität: 01.09.2009 DE 102009029052
(71) Anmelder: Robert Bosch GmbH, 70442 Stuttgart (DE)
(72) Erfinder: Hasch, Juergen, 70195 Stuttgart (DE); Brosche, Thomas, 70839 Gerlingen (DE)

(57) **Zusammenfassung**

Beschrieben wird ein Verfahren und eine Vorrichtung zum Bereitstellen eines Reflexionssignals, wobei ein erstes Referenzsignal (221) u.a. durch Mischen der zwei Ausgangssignale von zwei Frequenzgeneratoren (PLL1, PLL2) erzeugt wird und wobei das erste Referenzsignal (221) zur Demodulation (M2) eines Empfangssignals (RX) und zur Generierung des Abtasttaktes oder zur Erzeugung eines zweiten Referenzsignals (405) zur weiteren Demodulation (M4) des Empfangssignals dient.

## Beschreibung

### Gebiet der Erfindung

Die vorliegende Erfindung betrifft ein Verfahren zum Bereitstellen eines Reflexionssignals und eine Vorrichtung zum Bereitstellen eines Reflexionssignals.

### Stand der Technik

In dem Buch Skolnik, M.I., "Introduction to Radar Systems", McGraw-Hill Book Company, Inc., New York, 1962 wird eine Einführung in Radarsysteme gegeben.

Das Buch Ludloff, A., "Praxiswissen Radar und Radarsignalverarbeitung", 2. Aufl., Vieweg, Wiesbaden, 1998 beschreibt Prinzipien der Radartechnologie.

In der Druckschrift DE 20 2007 009 431 U1 wird ein Breitbandempfangssystem beschrieben.

Das Paper Sliskovic, M., "Software Defined Automotive Receiver for Broadcasting Services", Digits of Technical Papers, International Conference on Consumer Electronics 2008, Seiten 1-2, Las Vegas, 9-13 Januar 2008 beschreibt Softwareautomobilempfänger.

Die Druckschrift Bonek, E. et al., "Personal Communications Transceiver Architectures for Monolithic Integration", 5th IEEE International Symposium on Personal, Indoor and Mobile Communications, Volume 1, pages 363-368, 1994, behandelt Transceiver-Architekturen zur persönlichen Kommunikation.

Die Druckschrift Kato, Y., et al., "IQ Imbalance Compensation Scheme for MB-OFDM with Transmit Diversity", The 2006 IEEE International Conference on Ultrawideband, pages 293-298, 24-27 Sept. 2006, beschreibt eine Kompensierung von IQ-Ungleichgewichten.

Die Druckschrift Lee, Kang-Yoon et al., "Full-CMOS 2-GHz WCDMA (Wideband Code Division Multiple Access) Direct Conversion Transmitter and Receiver", IEEE Journal of Solid-State Circuits, Volume 38, Issue 1, pages 43-53, Jan. 2003, beschreibt einen Transmitter und einen Sender und Empfänger zur direkten Umwandlung von WCDMA.

Die Druckschrift Sachs, S. et al., "M-Sequence Ultra-Wideband-Radar: State of Development and Applications", Radar Conference 2003, Adelaide (Australia), 3-5 September 2003 befasst sich mit einem Ultrabreitbandradar.

Die Druckschrift Norsworthy, S. et al., "Delta Sigma Data Converters, Theory Design and Simulation", IEEE Press, New York, 1996, ISBN 0-7803-1045-4, offenbart Delta Sigma Datenwandler.

Shoaei, O., "Continuous-time Delta-Sigma A/D (Analog/Digital) Converters for High Speed Applications", Dissertation Carleton University 1995, befasst sich mit der Delta-Sigma-Analog/Digital-Konvertierung.

Die Druckschrift Cherry, J.A., Snelgrove, W.M., "Continuous-time Delta-Sigma Modulators for High Speed A/D Conversion", Kluwer Academic Publishers, Boston, 2000, beschreibt Delta-Sigma-Modulatoren für die schnelle Analog/Digital-Wandlung.

Das Buch Michael Hiebel, "Grundlagen der vektoriellen Netzwerkanalyse, Rohde&Schwarz" beschreibt das Prinzip der Reflexions- und Transmissionsfaktormessung.

Das Buch Behzad Razavi, "RF Microelectronics, Prentice Hall" beschreibt verschiedene Transceiver-Architekturen

Für die Materialanalyse mit Hilfe elektromagnetischer Wellen können Radarmesssysteme eingesetzt werden, welche auf dem Aussenden eines Signals und dem Messen eines von einem Körper reflektierten Signals beruhen. Da die ausgesandten Signale auf ihrem Weg zum Messobjekt und zurück von dem Messobjekt den unterschiedlichsten Arten von Störungen unterliegen, beispielsweise Fading oder Frequenzauslöschung, und da es außerdem auch zu Störreflexionen kommen kann, ist es ein Bestreben, Empfangssignale zu erhalten, welche sich möglichst deutlich von den Störsignalen oder Rauschsignalen unterscheiden. Aufgrund der Wellencharakteristik von Radarsignalen kann es bei ungünstiger Überlagerung der Reflexionssignale zu gegenseitigen Auslöschungen von Bergen und Tälern der elektromagnetischen Welle kommen.

Daher ist man bei der Radarmesstechnologie bestrebt, Empfangssignale möglichst kohärent zu überlagern. Die kohärente Überlagerung von zeitlich hintereinander empfangenen Signalen führt zu einer gleichförmigen Verstärkung und hilft, das Signal besser erkennbar zu machen.

### Offenbarung der Erfindung

Es ist demnach eine Aufgabe der vorliegenden Erfindung, ein effektives Bereitstellen von Reflexionssignalen anzugeben.

Gemäß einem exemplarischen Ausführungsbeispiel der vorliegenden Erfindung wird ein Verfahren zum Bereitstellen eines Reflexionssignals als Zwischenfrequenzsignal und eine Vorrichtung zum Bereitstellen eines Reflexionssignals als erstes Zwischenfrequenzsignal gemäß den unabhängigen Patentansprüchen angegeben.

Weitere Ausführungsbeispiele und Fortbildungen des erfindungsgemäßen Verfahrens und der erfindungsgemäßen Vorrichtung ergeben sich aus den abhängigen Patentansprüchen.

Das Verfahren zum Bereitstellen eines Reflexionssignals als Zwischenfrequenzsignal weist das Erzeugen eines Sendesignals mit einer Sendefrequenz und das Erzeugen eines ersten Referenzsignals auf, welches eine erste Referenzfrequenz aufweist. Diese erste Referenzfrequenz ist gegenüber der Sendefrequenz um eine vorgebbare erste Frequenz verschoben. Diese vorgebbare erste Frequenz mag mit dem Begriff erste Zwischenfrequenz bezeichnet werden. Das Signal, welches aus dem Mischen des Sendesignals mit der Sendefrequenz und des ersten Referenzsignals mit der ersten Referenzfrequenz hervorgeht, mag als erstes Referenz-Zwischenfrequenzsignal, Referenz-Zwischenfrequenzsignal, Zwischenfrequenz-Referenzsignal oder ZF-Referenzsignal bezeichnet werden. Das ZF-Referenzsignal mag die erste Zwischenfrequenz aufweisen. Die vorgebbare erste Zwischenfrequenz mag also durch Mischen der Sendefrequenz und der erzeugten ersten Referenzfrequenz generiert werden. Insbesondere mögen die zu den jeweiligen Frequenzen zugeordneten Signale gemischt werden.

Das Verfahren sieht weiter vor, dass ein Sendesignal in Richtung eines Messobjekts ausgesendet wird. Das Sendesignal mag beispielsweise eine elektromagnetische Welle oder ein Radarpuls sein. Das gesendete Sendesignal wird an dem Messobjekt reflektiert und zumindest ein Teil des ausgesandten Sendesignals kann als reflektiertes Empfangssignal empfangen werden.

Dieses Empfangssignal wird mit dem ersten Referenzsignal gemischt, wodurch ein erstes Zwischenfrequenzsignal oder ein Empfangs-Zwischenfrequenzsignal entstehen mag. Dieses erste Zwischenfrequenzsignal kann für eine weitere Verarbeitung bereitgestellt werden.

In anderen Worten mag das erste Referenzsignal durch Mischen des Sendesignals und eines rückgekoppelten ersten Referenzsignals generiert werden.

Das Sendesignal mag von einem ersten Frequenzgenerator oder Oszillator generiert werden und das erste Referenzsignal mag von einem zweiten Frequenzgenerator oder Oszillator generiert werden. Der zweite Frequenzgenerator mag das erste Referenzsignal derart generieren, dass eine Abhängigkeit des ersten Referenzsignals von dem Sendesignal entstehen mag. Die Abhängigkeit mag erzeugt werden, indem das Sendesignal mit dem rückgekoppelten ersten Referenzsignal gemischt wird und dem zweiten Frequenzgenerator zugeführt wird.

Das Phasenrauschen der beiden oder mehreren Frequenzgeneratoren ist im Wesentlichen nicht miteinander korreliert. Das Zwischenfrequenz-Empfangssignal, ZF-Empfangssignal oder Empfangs-Zwischenfrequenzsignal besitzt dieselben Phasenrauscheigenschaften wie das Zwischenfrequenz-Referenzsignal, jedoch um die Laufzeit des Empfangssignals τ verzögert.

Mit Hilfe der Direktabtastung des Empfangs-Zwischenfrequenzsignals mit einem auf dem ersten Referenzsignal bzw. auf dem Zwischenfrequenz-Referenzsignal basierenden Abtasttakt kann die Eigenschaft der Korrelation zwischen dem Referenz-Zwischenfrequenzsignal und dem Empfangs-Zwischenfrequenzsignal ausgenutzt werden.

Parallel zu dem Rückkoppeln des ersten Referenzsignals mag das generierte erste Referenzsignal mit dem Empfangssignal gemischt werden, wodurch das Empfangssignal auf ein Empfangs-Zwischenfrequenzsignal umgesetzt werden kann. Die Mischung mag eine Umsetzung des Empfangssignals auf eine erste Zwischenfrequenz darstellen. Durch das Mischen mag ein Zwischenfrequenzsignal oder Empfangs-Zwischenfrequenzsignal entstehen. Das Empfangs-Zwischenfrequenzsignal mag noch nicht vollständig demoduliert sein und mag noch einen Träger, die Zwischenfrequenz z.B. f_{ZF1}, aufweisen

Da sich Störungen wie das Phasenrauschen gleichsinning auf die Empfangs-Zwischenfrequenzsignale und Referenz-Zwischenfrequenzsignale auswirken, kann das Phasenrauschen in einer nachfolgenden Verarbeitung im Wesentlichen unterdrückt werden.

Gemäß einem weiteren exemplarischen Ausführungsbeispiel der vorliegenden Erfindung wird eine Vorrichtung zum Bereitstellen eines Reflexionssignals beschrieben. Die Vorrichtung weist eine Sendesignal-Einrichtung, eine Referenzsignal-Einrichtung, eine Sende-Einrichtung, eine Empfangs-Einrichtung und eine Misch-Einrichtung auf.

Die Sendesignal-Einrichtung ist derart angepasst, dass sie ein Sendesignal mit einer Sendefrequenz erzeugen kann. Die Sendefrequenz kann fest vorgebbar sein oder sich variabel nach einem vorgebbaren Schema ändern.

Die Referenzsignal-Einrichtung erzeugt ein Referenzsignal oder ein erstes Referenzsignal, welches eine erste Referenzfrequenz aufweist. Eine so eingerichtete Referenzsignal-Einrichtung mag das erste Referenzsignal derart erzeugen, dass es eine erste Referenzfrequenz gegenüber der Sendefrequenz aufweist, welche erste Referenzfrequenz um eine vorgebbare Zwischenfrequenz gegenüber dem Sendesignal verschoben ist.

In einem Beispiel mag das Verschieben um eine Zwischenfrequenz ein Voreilen oder ein Nacheilen des ersten Referenzsignals gegenüber dem Sendesignal bedeuten. Insbesondere mag das Verschieben bei dem Verwenden eines sinusförmigen Frequenzverlaufs des Sendesignals ein Voreilen oder ein Nacheilen bedeuten.

Wird ein anderer als ein sinusförmiger Frequenzverlauf verwendet, mag das Verschieben des ersten Referenzsignals gegenüber dem Sendesignal um eine Zwischenfrequenz bedeuten, dass das erste Referenzsignal eine größere Frequenz oder eine kleiner Frequenz aufweist.

Somit entsteht das erste Referenzsignal aus dem Sendesignal durch eine Frequenzverschiebung des Sendesignals. Ferner kann das Verschieben des Sendesignals um eine Zwischenfrequenz eine höhere oder geringere Frequenz des Referenzsignals gegenüber dem Sendesignal bedeuten.

Die Frequenz des Empfangs-Zwischenfrequenzsignals (f_{ZF1}) ist im Wesentlichen identisch mit der Differenz aus der Frequenz des ersten Referenzsignals und der Frequenz des Sendesignals (f_{ZF1}= f_{Ref1}- f_{Mod}, f_{ZF1}= f_{Mod} - f_{Ref1} oder f_{ZF1}= |f_{Ref1}- f_{Mod}| ). Die Differenzfrequenz F_{ZF1} ist im Wesentlichen die Differenz der beiden Oszillatorfrequenzen oder die Differenz der Frequenzen der Oszillatoren, beispielsweise in PLL1 und PLL2.

Die Sende-Einrichtung ist zum Senden des Sendesignals in Richtung eines Messobjekts eingerichtet. Zur Bestimmung einer Richtung des Sendesignals mag die Sende-Einrichtung eine Antenne aufweisen. Die Antenne mag sowohl zum Senden als auch zum Empfangen eines Signals verwendet werden können.

Die vorgebbare Zwischenfrequenz oder ein Signal mit der vorgebbaren Zwischenfrequenz oder das ZF-Referenzsignal kann generiert werden, indem ein Signal, aufweisend eine Sendefrequenz (f_{Mod}), und ein generiertes erstes Referenzsignal, aufweisend eine erste Referenzfrequenz (f_{Ref1}), gemischt werden. Insbesondere wird ein Zwischenfrequenzsignal durch Mischen eines Empfangssignals, welches im Wesentlichen die Sendefrequenz aufweist, und dem ersten Referenzsignal generiert.

Die Empfangs-Einrichtung ist zum Empfangen des an dem Messobjekt reflektierten Empfangssignals eingerichtet und kann das Empfangssignal an die Misch-Einrichtung weiterleiten, wobei die Misch-Einrichtung angepasst ist, ein erstes Zwischenfrequenzsignal, Empfangs-Zwischenfrequenzsignal, Zwischenfrequenz-Empfangssignal oder ZF-Empfangssignal zu erzeugen indem das Empfangssignal mit dem ersten Referenzsignal gemischt wird. Das Ergebnis dieser Mischung des Empfangssignals und des Referenzsignals kann an der Misch-Einrichtung als erstes Zwischenfrequenzsignal bereitgestellt werden.

Gemäß einem anderen exemplarischen Ausführungsbeispiel der vorliegenden Erfindung wird ein computerlesbarer Datenträger angegeben, auf dem eine Software gespeichert ist, die, wenn sie von einem Prozessor ausgeführt wird, das erfindungsgemäße Verfahren zum Bereitstellen eines Reflexionssignals ausführt.

Beispielsweise kann auch ein FPGA (Field Programmable Gate Array) bereitgestellt werden, wobei eine ladbare Steuersequenz des FPGAs als Software angesehen werden kann. Der FPGA mag derart programmiert sein, dass wenn der FPGA entsprechende Eingangssignale erhält, der FPGA das erfindungsgemäße Verfahren zum Bereitstellen eines Reflexionssignals ausführt. Das Programm oder die Struktur des FPGA kann auch in einem EPROM (Erasable Programmable Read-Only-Memory) gespeichert sein. Anstelle eines FPGAs kann auch ein ASIC (application specific integrated circuit) genutzt werden.

Die erfindungsgemäße Vorrichtung mag sich als IC (Integrated Circuit) oder als spezifische digitale Hardware (FPGA oder ASIC) realisieren lassen.

Das Verfahren kann weiter vorsehen, ein zweites Referenzsignal mit einer zweiten Referenzfrequenz zu generieren, wobei die zweite Referenzfrequenz gegenüber der ersten Zwischenfrequenz um eine zweite Zwischenfrequenz verschoben ist oder wobei das zweite Zwischenfrequenzsignal die zweite Zwischenfrequenz aufweist. Diese zweite Zwischenfrequenz mag in einem Beispiel kleiner als die erste Zwischenfrequenz sein und in einem anderen Beispiel mag die zweite Zwischenfrequenz größer als die erste Zwischenfrequenz sein. In anderen Worten mag die erste Zwischenfrequenz und die zweite Zwischenfrequenz unterschiedlich sein. Wird das erste Zwischenfrequenzsignal mit dem zweiten Referenzsignal gemischt, mag sich die erste Zwischenfrequenz eliminieren oder aufheben. Durch das Aufheben der ersten Zwischenfrequenz mag ein zweites Zwischenfrequenzsignal mit vorzugsweise einer geringeren Zwischenfrequenz entstehen. Die zweite Zwischenfrequenz mag stabilisiert sein.

Das zweite Zwischenfrequenzsignal kann dann anstelle des ersten Zwischenfrequenzsignals bereitgestellt werden. Durch das Mischen des zweiten Referenzsignals mit dem dem ersten Zwischenfrequenzsignal oder mit dem Empfangs-Zwischenfrequenzsignal mag das Nutzsignal auf einen anderen Träger, der beispielsweise die zweite Zwischenfrequenz aufweist, umgeformt werden.

In einem Beispiel mag das erste Zwischenfrequenzsignal und/oder das zweite Zwischenfrequenzsignal direkt abgetastet werden um mit Hilfe einer nachfolgenden digitalen Signalverarbeitung ein demoduliertes digitales I/Q Empfangssignal zu erhalten. Zum direkten Abtasten mag das Prinzip der Direktabtastung zum Einsatz kommen. Bei einem I/Q Empfangssignal mag es sich um ein in eine Inphasekomponente (I) und eine Quadraturkomponente (Q) demoduliertes Zwischenfrequenzsignal handeln. Durch Direktabtastung des Zwischenfrequenzsignals mag also ein demoduliertes I/Q-Empfangssignal ermittelt werden. Das Abtasten der I- und/oder Q- Komponenten mag es ermöglichen mit einfachen Abtasteinrichtungen hochfrequente Signale direkt abzutasten, welche hochfrequenten Signale beispielsweise eine hohe Empfangszwischenfrequenz aufweisen. Ein weiteres Herabmischen auf beispielsweise eine niedrige Zwischenfrequenz kann folglich vermieden werden.

Ferner mag das Verfahren ein Abtastsignal oder ein Taktsignal für eine Signalvorverarbeitung, insbesondere für eine digitale Vorverarbeitung, derart ermitteln, dass eine Taktsignalfrequenz entsteht, welche größer als zumindest eine der ersten Zwischenfrequenz und der zweiten Zwischenfrequenz ist. In einem anderen Beispiel mag eine Taktsignalfrequenz oder Abtastfrequenz entstehen, welche im Wesentlichen gleich groß ist wie zumindest eine der ersten Zwischenfrequenz und der zweiten Zwischenfrequenz.

Dadurch kann die digitale Signalvorverarbeitung mit einer höheren Taktrate als das Zwischenfrequenzsignal oder mit der gleichen Taktrate wie das Zwischenfrequenzsignal, also entweder das erste Zwischenfrequenzsignal oder das zweite Zwischenfrequenzsignal, gewährleistet werden. Die höhere Taktrate mag ggf. eine Überabtastung des Zwischenfrequenzsignals bedeuten und das Erfüllen des Abtasttheorems im Wesentlichen sicherstellen. Mittels eines Sigma-Delta Modulators (ΣΔ-ADC, ΔΣ-ADC, ΣΔ-Analog-Digital-Wandler) mag eine Überabtastung realisierbar sein.

Sämtliche Signale, sei es das Sendesignal, das erste Referenzsignal, das zweite Zwischenfrequenzsignal oder das Taktsignal mögen von einem im Wesentlichen konstanten gemeinsamen Frequenzgenerator, Grundtaktgenerator oder Quarz abhängen bzw. abgeleitet worden sein. Alternativ kann jedes Signal auch von einem eigenen Oszillator generiert werden. In anderen Worten kann jedes Signal einen eigenen unabhängigen Frequenzgenerator, Oszillator oder Quarz haben.

Das Sendesignal mag ein Ultrabreitbandsignal (UWB, ultra wide band), also ein sehr breitbandiges Signal sein. Eine Rampe mag beispielsweise ein UWB Signal sein.

Das Sendesignal weist vorzugsweise eine konstante Anplitude auf und kann in der Frequenz moduliert werden (z.B. stufenförmige Rampe, Sägezahn, FMCW (Frequenz moduliertes kontinuierliches Wellensignal), etc.) In analoger Weise sind andere Modulationsarten jedoch auch möglich (z.B. Puls, ASK (Amplitude Shift Keying), PSK (Phase Shift Keying), FSK (Frequency Shift Keying), Pseudo-Rauschen bzw. PN (Pseudo Noise)). Kombinationen zwischen den Modulationsarten sind auch möglich. In anderen Worten soll ein vorgebbares Frequenzband von dem Modulationssignal belegt werden. Das vorgebbare Frequenzband kann ein breitbandiges (UWB) Frequenzband sein.

Die Sendesignal-Amplitude kann insbesondere bei der vorzugsweise verwendeten stufenförmigen Rampen Modulation oder der FMCW Modulation frequenzabhängig variiert werden, um z.B. Zulassungsvoraussetzungen oder Regularien zu erfüllen.

Eine Vorrichtung zum Bereitstellen eines Reflexionssignals kann in unterschiedlichen Geräten zum Einsatz kommen. Beispielsweise kann die Vorrichtung zum Bereitstellen eines Reflexionssignals in einem Elektrowerkzeug (z.B. einer Kreissäge, einer Stichsäge, einem Trennschleifer, einem Rasenmäher, einer Heckenschere, einem Häcksler), in einem Kraftstoffsensor, in einem Fehlbetankungssensor, in einem Materialerkennungsgerät (z.B. Wandfeuchtemessgerät) oder in einem Leitungsdetektor eingesetzt werden.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte in Bezug auf Verfahrensansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen, die zu einer Kategorie von Gegenständen gehört, auch jede Kombination zwischen Merkmalen als von diesem Text offenbart, angesehen wird, die sich auf unterschiedliche Kategorien von Gegenständen bezieht. Insbesondere sollen Kombinationen zwischen Merkmalen von Vorrichtungsansprüchen und Merkmalen von Verfahrensansprüchen offenbart sein.

### Kurze Beschreibung der Figuren

Im Folgenden werden weitere exemplarische Ausführungsbeispiele der vorliegenden Erfindung mit Verweis auf die Figuren beschrieben.
Fig. 1 zeigt ein prinzipielles Blockdiagramm eines UWB-Messsystems gemäß einem exemplarischen Ausführungsbeispiel der vorliegenden Erfindung.
Fig. 1a zeigt ein Blockdiagramm einer Messanordnung als Mehr-Tor Messanordnung gemäß einem exemplarischen Ausführungsbeispiel der vorliegenden Erfindung.
Fig. 2a zeigt ein Blockdiagramm eines einfach heterodynen UWB-Radarsystems gemäß einem exemplarischen Ausführungsbeispiel der vorliegenden Erfindung.
Fig. 2b zeigt ein Blockdiagramm eines ersten Frequenzgenerators gemäß einem exemplarischen Ausführungsbeispiel der vorliegenden Erfindung.
Fig. 2c zeigt ein Blockdiagramm eines zweiten Frequenzgenerators gemäß einem exemplarischen Ausführungsbeispiel der vorliegenden Erfindung.
Fig. 3 zeigt ein Zeitfrequenzdiagramm einer stufenförmigen Rampe gemäß einem exemplarischen Ausführungsbeispiel der vorliegenden Erfindung.
Fig. 4a zeigt ein Blockdiagramm eines doppelt heterodynen UWB-Radarsystems gemäß einem exemplarischen Ausführungsbeispiel der vorliegenden Erfindung.
Fig. 4b zeigt ein Blockdiagramm eines Einseitenbandmischers gemäß einem exemplarischen Ausführungsbeispiel der vorliegenden Erfindung.

Die Darstellungen in den Figuren sind schematisch und nicht maßstabsgetreu.

In der folgenden Beschreibung der Figuren werden die gleichen Bezugsziffern für gleiche oder sich entsprechende Elemente verwendet.

### Detaillierte Beschreibung der Figuren

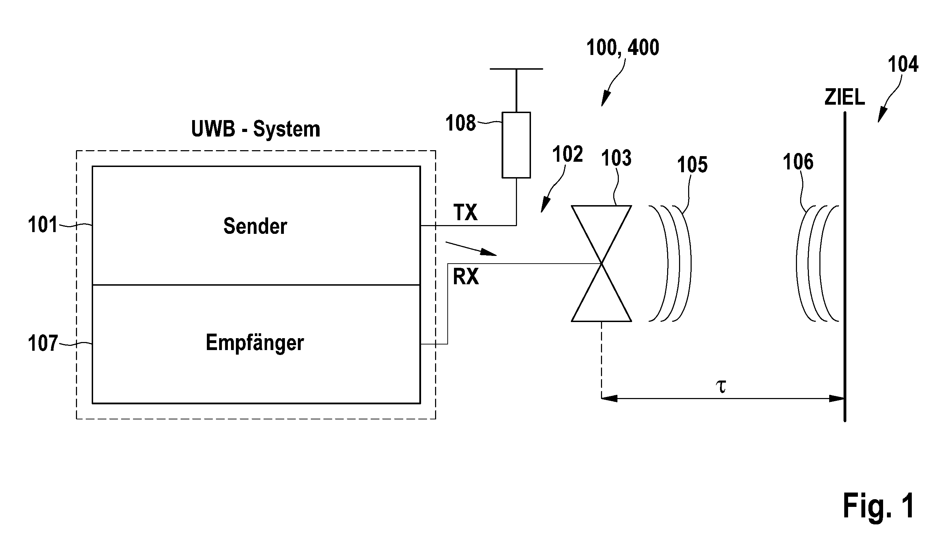

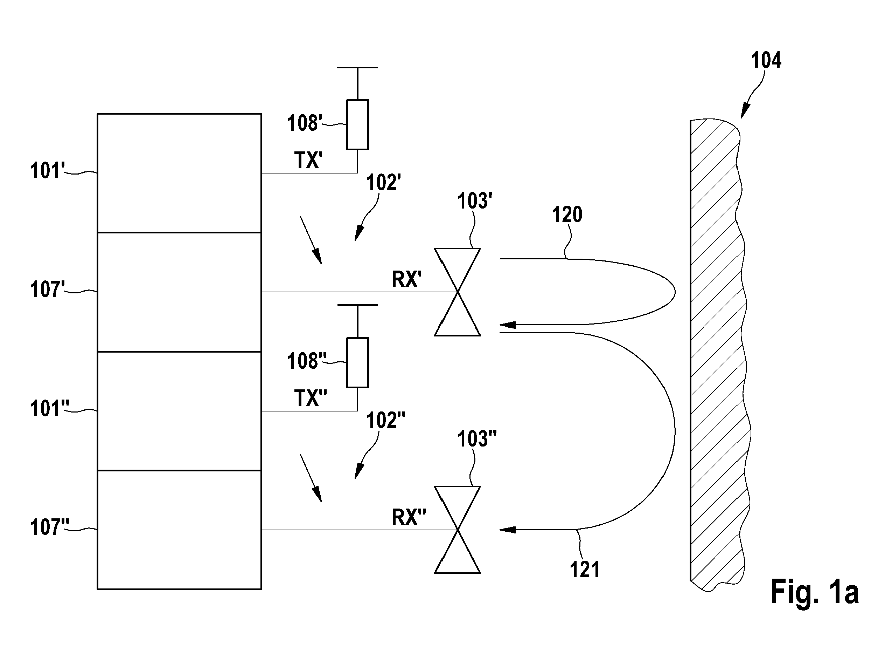

Fig. 1 zeigt den prinzipiellen Aufbau eines UWB (Ultra Wide Band, Ultrabreitband) Messsystems. Ein solches UWB-Messsystem 100 kann für die Materialanalyse mit Hilfe elektromagnetischer Wellen, beispielsweise zur Erkennung von menschlichem Gewebe, eingesetzt werden. Bei einem UWB-Messsystem handelt es sich um ein Radarmesssystem mit einer im allgemeinen sehr hohen Messbandbreite (UWB, Ultra Wide Band), welches nach dem Radarmessprinzip arbeitet.

Das UWB-Messsystem weist einen Sender 101 auf, der über einen Richtkoppler (in Fig. 1 durch den Pfeil 102 dargestellt) ein von dem Sender 101 erzeugtes Sendesignal auf die Antenne 103 einkoppelt. Das im Sender erzeugte modulierte Radarsignal (TX) wird über die Sendeantenne 103 in Richtung des Ziels 104 abgestrahlt. Das abgestrahlte Signal ist in Fig. 1 durch die Wellen 105 dargestellt. Das abgestrahlte elektromagnetische Signal 105, TX, wird dann an einem gegebenenfalls im Detektionsfeld vorhandenen Ziel 104 reflektiert. Die Laufzeit zwischen Sender 101, 103 und Empfänger beträgt τ. Ein solches Ziel kann beispielsweise auch ein Übergang zwischen unterschiedlichen Materialien sein. Im Wesentlichen wird der Frequenzgang und insbesondere die Phase des Sendesignals 105 durch die Reflexion oder durch das Eindringen in unterschiedliche Materialien verändert. Es ergibt sich dadurch ein charakteristischer Verlauf einer Reflexionskurve über der Frequenz des Sendesignals, der als Betrag und Phase dargestellt werden kann. Der Verlauf kann auch in der kartesischen Form (I/Q-Werte) bzw. der Gaußschen Zahlenebene dargestellt werden.

Die Terminierung 108 sorgt insbesondere bei monostatischem Betrieb für die wellenwiderstandsangepasste Terminierung des nicht auf die Antenne 103 eingekoppelten Sendesignals TX.

Als alternatives Ausführungsbeispiel (nicht in Fig. 1 dargestellt) können zwei separate Antennen 103, eine Sendeantenne und eine Empfangsantenne, zum Einsatz kommen (bistatischer Betrieb). Die Terminierung 108 kann bei einem bistatischen Betrieb entfallen. In anderen Worten, die Terminierung 108 bildet im bistatischen Betrieb die Sendeantenne 108. Ein Richtkoppler 102 ist im bistatischen Betrieb nicht vorhanden.

Das reflektierte Signal ist in Fig. 1 durch die in die der Senderichtung 105 entgegengesetzt laufenden Wellen 106 dargestellt, welche in Richtung der Antenne 103 laufen. Über die Antenne 103 kann das reflektierte Signal 106 wieder empfangen werden. Das empfangene Signal RX kann in den Empfänger 107 geleitet und dort weiter verarbeitet werden.

Das Ergebnis der Weiterverarbeitung in dem Empfänger 107 kann ein komplexwertiger Reflexions- bzw. Transmissionsfaktor oder ein komplexwertiger S-Parameter sein. Der komplexwertige Reflexionsfaktor S₁₁ ergibt sich aus dem Verhältnis des Empfangssignals RX zu dem Sendesignal TX über der (Modulations) Frequenz f_{mod} oder f_{Mod}. Der komplexwertige Reflexionsfaktor über der Frequenz f_{mod} aufgetragen, gibt den Verlauf des Streuparameters des Funkfeldes an. Zur Vereinfachung der Darstellung kann der Reflexionsfaktor als I/Q-Werte dargestellt werden.

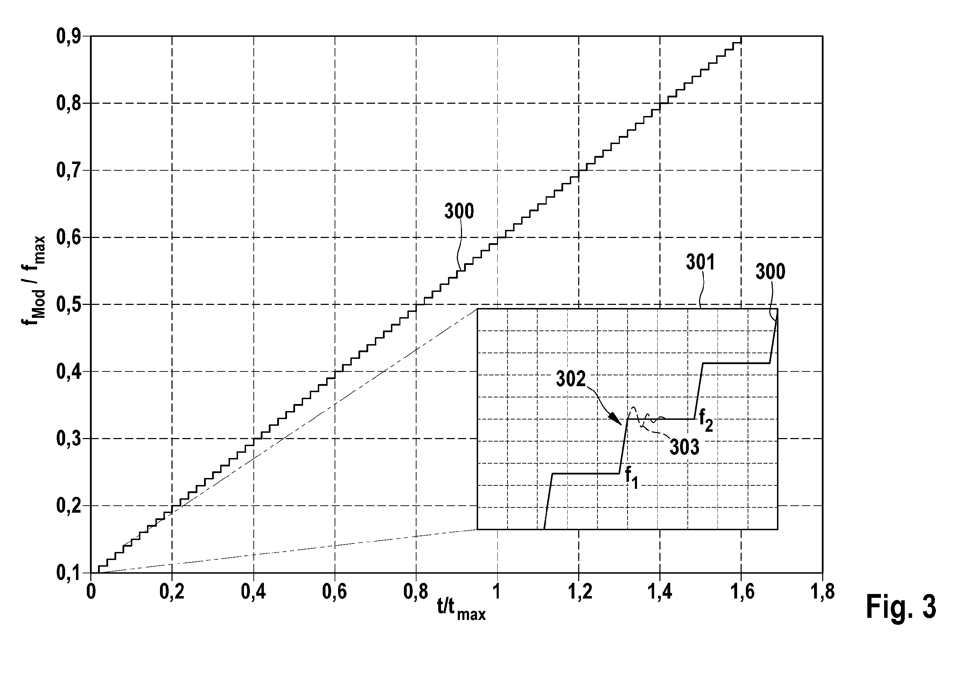

Als Sendesignal Tx kann ein stufenförmiges Modulationssignal eingesetzt werden, dessen Modulationsfrequenzverlauf 300 in Fig. 3 dargestellt ist. Einen Ausschnitt des Verlaufs der Modulationsfrequenz zeigt die Vergrößerung 301. Aus dieser Vergrößerung ist erkennbar, dass die Stufen der stufenförmigen Modulation 300 durch Einschwingvorgänge nicht rechtwinklig, sondern schräg verlaufen können. Durch Einschwingvorgänge kann auch bei einem Übergang 302 von der Frequenz f1 zu der Frequenz f2, also zwischen zwei unterschiedlichen Frequenzen, ein Überschwingen 303 auftreten. Bei einem Übergang zwischen zwei Frequenzen f1, f2, also an den Treppenstufen, kann es zu Einschwingvorgägngen kommen, da es eine Zeit benötigt bis interne PLLs (Phase Lock Loops) PLL1, PLL2 im Sender und/oder Empfänger auf die geänderten Soll-Frequenzwerte eingeschwungen sind. Insbesondere am Anfang kann die Frequenz durch Einschwingvorgänge verfälscht sein.

In Fig. 3 ist eine normierte Sendefrequenz f_{Mod}/fₘₐₓ, also die Sendefrequenz bezogen auf eine maximale Frequenz dargestellt. Ferner ist die normierte Zeit t/tₘₐₓ, also die Zeit bezogen auf eine maximale Zeit oder eine Periode dargestellt. Die Frequenz fₘₐₓ kann sich im Mega Hertz, Giga Hertz oder Tera Hertz Bereich bewegen.

So kann als Ergebnis oder Ausgabe des UWB Messystems 100 das Empfangssignal RX über der Frequenz, insbesondere über der ModulationsFrequenz dargestellt werden. Das Ergebnis kann beispielsweise der Verlauf des Streuparameters S₁₁ des Funkfeldes sein. Es kann folglich für jede Modulationsstufe oder für jede eingestellte Sendefrequenz ein komplexer Messwert S₁₁(f) bestimmt werden.

Zwar arbeitet das UWB-Messsystem 100 oder das Radar 100 mit der stufenförmigen Modulation 300 (step frequency modulation) im Frequenzbereich. Anstelle der stufenförmigen Modulation wäre jedoch auch ein anderes Modulationsverfahren, beispielsweise das Aussenden eines Pulses oder Bursts, das FMCW (das Frequenz modulierte Dauer-Radar oder Frequency Modulated Continuous Wave Radar) oder eine Pseudo-Zufallsfolge (PN) mit einer entsprechend hohen Bandbreite einsetzbar.

In der Fig. 1 ist ein monostatischer Betrieb des UWB-Systems 100 gezeigt. In dem monostatischen Betrieb wird nur eine einzige Antenne 103 sowohl zum Senden als auch zum Empfangen verwendet. Mehrere Antennen können aber auch parallel betrieben werden (beispielsweise im bistatischen Betrieb).

Der Teil der Sendeleistung, der nicht über die Antenne 103 abgestrahlt wird, kann an dem Widerstand 108 abgebaut werden.

Das im Sender 101 erzeugte entsprechend der stufenförmigen Modulation 300 modulierte Radarsignal TX wird über die Sendeantenne 103 abgestrahlt. Das abgestrahlte elektromagnetische Signal wird dann gegebenenfalls an im Detektorfeld vorhandenen Zielen 104 reflektiert und über die Antenne 103 wieder empfangen. Das Empfangssignal kann im Empfänger 107 weiterverarbeitet werden und in komplexwertige Reflexionsfaktoren umgerechnet werden.

Bei Modulationen, die ein Empfangssignal im Zeitbereich ergeben, beispielsweise bei einem Puls oder einer Pseudorauschenfolge wird ggf. in einer nachfolgenden Signalverarbeitungseinheit noch eine Fourier-Transformation in den Frequenzbereich durchgeführt, um zu den oben erwähnten Streuparametern im Frequenzbereich zu gelangen.

In Radarsystemen 100, die mit der sogenannten Direktabtastung arbeiten, wird versucht, den analogen Schaltungsanteil einer Auswerteschaltung in einem Empfänger 107 zu reduzieren. In anderen Worten bedeutet das, dass bei einer Direktabtastung in dem Empfänger 107 möglichst frühzeitig versucht wird, auf digitale Schaltungsteile für die Signalverarbeitung zurückzugreifen, insbesondere für die Bereitstellung der Streuparameter des Funkfeldes. Dies kann insbesondere bei UWB-Radarsystemen zu einem erhöhten Schaltungsaufwand führen, da das Arbeiten mit breitbandigen Signalen auch breitbandige Verstärker oder breitbandige Abtaster voraussetzt. Breitbandige digitale Komponenten wie breitbandige Analog/Digital-Wandler (ADC) oder breitbandige Verstärker erfordern jedoch einen erhöhten Aufwand bei der Herstellung und können kostenintensiv bei der Beschaffung sein.

Ultrabreitbandige (UWB) Radarsysteme können in den unterschiedlichsten Anwendungen eingesetzt werden. Neben der Kommunikationstechnik können UWB-Systeme zur Zielerkennung oder Zielverfolgung genutzt werden. Bei der Realisierung eines ultrabreitbandigen (UWB) Radarmesssystems als integrierte Schaltung mag darauf zu achten sein, dass möglichst wenig Multipliziereinheiten für die Signalverarbeitung eingesetzt werden. Ferner mag bei der Realisierung als integrierte Schaltung eine hohe Unterdrückung von Störsignalen außerhalb des Nutzbandes wünschenswert sein. Dabei mag auch auf eine möglichst gute Kompensation von I/Q-Fehlern zu achten sein.

UWB-Systeme 100 lassen sich als Homodyn-Systeme mit einem einzigen Oszillator oder als Heterodyn-Systeme mit zumindest zwei Oszillatoren PLL1, PLL2 realisieren.

Die Grundidee eines Radarmesssystems zur Messung eines frequenzabhängigen Reflexionsfaktors im Frequenzbereich kann in einer Doppeloszillatorausführung PLL1, PLL2 realisiert werden. Der Einsatz zweier Hochfrequenzoszillatoren PLL1, PLL2 dient dazu, eine Zwischenfrequenz im Empfänger erzeugen zu können. Auf dieser Zwischenfrequenz findet eine Filterung und eine Verstärkung des Empfangssignals statt. Mittels dieser Filterung und Verstärkung kann eine hohe Unterdrückung von Störsignalen außerhalb der Empfängerbandbreite und eine hohe Empfindlichkeit des Empfängers 107 realisiert werden, indem unter anderem das 1/f- Rauschen im Wesentlichen unterdrückt wird, welches bei Direktempfängern zu Störungen führen kann.

Beim Arbeiten mit einer Zwischenfrequenz kann im Wesentlichen Vermieden werden, dass ein Gleichspannungs-Offset zu einer Verfälschung des Empfangssignals führt. Ein Gleichspannungs-Offset kann durch Störsignale oder durch internes Übersprechen im Empfangsmischer entstehen. Beim Arbeiten mit der Zwischenfrequenz wird sozusagen ein Bandpasssignal erzeugt, welches außerhalb des Basisbands liegt. Zusätzlich kann noch mit dem ZF Filter 204 eine ZF (Zwischenfrequenz) Filterung zur Störunterdrückung vorgenommen werden.

Durch geschicktes Auslegen einer Schaltung in einem UWB-System kann erreicht werden, dass die Korrelationseigenschaften des Phasenrauschens zwischen dem Sendesignal TX bzw. dem Empfangssignal RX und dem für die Demodulation verwendeten Referenzsignal 221 erhalten bleibt, so dass eine hohe Dynamik des Messsystems 100 erreicht wird. Beispielsweise kann das Referenzsignal 221 und das Empfangssignal RX gleiche Signalanteile oder gleiche Freuqenzanteile f_{Mod} aufweisen. Trotz Ausbreiten auf unterschiedlichen Wegen können Korrelationseigenschaften erhalten bleiben. In der Doppeloszillatorausführung werden für das Sendesignal TX und das Referenzsignal 221 unterschiedliche Oszillatoren eingesetzt, die auf demselben Grundtakt 208, 209 basieren.

Diese beiden Oszillatoren mögen als PLLs (Phase Lock Loop) realisiert sein. Beide Oszillatoren PLL1, PLL2 haben ein Phasenrauschen. Die PLLs können auch auf unabhängigen Taktgeneratoren 208, 209 mit einem unabhängigen Grundtakt basieren.

In der Fig. 1a ist eine Messanordnung zur Messung mit einem Vier-Tor (4 Tor) gezeigt. Dabei handelt es sich um zwei parallel angeordnete UWB Systeme 100. Ein erstes Sendesignal wird über die Antenne 103' abgestrahlt und auch über Antenne 103' empfangen (monostatischer Betrieb). Somit kann die Antenne 103' als Sendetor und Empfangstor, also als Zweitor aufgefasst werden. Gleiches gilt ähnlich für die Antenne 103". In dem bistatischen Betrieb ist jedem Tor eine separate Antenne zugeordnet.

Das Sende Signal TX' breitet sich über den Reflexionspfad 120 und den Streupfad 121 aus. Das bedeutet, dass das reflektierte Sendesignal TX' sowohl als Reflexions-Empfangssignal RX' von dem ersten UWB System 101', 107' als auch als Streu-Empfangssignal RX" von dem zweiten UWB System 101", 107" empfangen wird. Beide Empfangssignale RX', RX" werden auf ähnliche Art und Weise in den beiden UWB Systemen 101', 107', 101", 107" weiterverarbeitet.

In entsprechender Art und Weise breiten sich die Signale von dem zweiten UWB System 101", 107" aus.

Die Sender 101',101",sind miteinander synchronisiert. Die Empfänger 107', 107", sind miteinander synchronisiert. Alternativ und/oder zusätzlich sind die Sender 101', 101" mit den Empfängern 107', 107" synchronisiert, d.h. basieren auf demselben Taktsignal oder verwenden dieselbe Signalquelle.

Es kann eine bliebige Vielzahl N (N mag eine beliebige natürliche Zahl sein) von UWB Systemen parallel geschaltet werden, um eine 2N Toranordnung (beispielsweise N=2 ist eine 4-Tor Anordnung) zu erhalten. Die N UWB Systeme können in einem einzigen Gerät integriert und deren Takt von einem einzigen Takt f_{Q} abgeleitet sein. Weiterhin kann eine beliebige Anzahl M (M mag eine beliebige natürliche Zahl sein) von Sende- oder Empfangskanälen hinzugenommen werden, um eine 2N+M Toranordung zu erhalten.

Die Antennen 103', 103" der 2N oder 2N+M Tore können unterschiedlich polarisiert sein, wodurch sich eine Kreuzpolarisation erzielen lässt. Bei der Kreuzpolarisation wird beispielsweise das Sendesignal mit einer ersten Polarisation gesendet und mit einer zweiten, davon abweichenden (z.B. um 90° gegeneinander gedreht), Polarisation empfangen. Mit einer entsprechenden Anzahl von Sendekanälen und Empfanskanälen kann auch eine Messung von Systemen mit mehr als 2 Toren möglich sein. Ein Sendekanal mag im Wesentlichen einem Sendetor entsprechen und ein Empfangskanal mag einem Empfangstor entsprechen. In der Figur Fig. 1a ist demnach ein System mit 2 Sende-/Empfangs-Kanälen bzw. 2 Kanälen bzw. 4 Toren dargestellt. Insbesondere zeigt die Figur 1a ein System mit einem ersten Sende-(TX') /Empfangskanal (RX') oder einem ersten Zweitor 103' (erstes Sende-/Empfangszweitor) und mit einem zweiten Sende-(TX")/Empfangskanal (RX") oder einem zweiten Zweitor 103" (Sende-/Empfangszweitor). Ferner ist dem ersten Sendetor RX' das erste Empfangstor RX' bzw. das erste Zweitor 103' (Empfangstor/zweiter Eingang) zugeordnet und dem zweiten Sendetor TX" ist das zweite Empfangstor RX" bzw. das zweite Zweitor 103" (zweites Sende-/Empfangszweitor) zugeordnet. Ein Kanal 120 oder Pfad 120 mag den ersten Sendekanal und den zugehörigen Empfangskanal aufweisen. Hierbei kann es sich um eine paarweise Zuordnung handeln.

Abweichend von der paarweisen Zuordnung kann eine beliebige Anzahl (>=1) von Sendetoren bzw. eine beliebige Anzahl (>=1) von Empfangstoren vorhanden sein und jedes Empfangstor kann das Signal von jedem Sendetor empfangen.

Ein Kanal 121 oder Pfad 121 mag den ersten Sendekanal und den zweiten Empfangskanal (z.B. bei Kreuzpolarisation) aufweisen.

Alle in einem System vorhandenen Sender und Empfänger sind miteinander synchronisiert und basieren vorzugsweise auf dem gleichen Takt f_{Q}.

Die parallele Anordnung von UWB Systemen 100 erlaubt eine Ausführung als Mehrkanal-Messsystem bzw. das Messen mittels einer Vielzahl von Sende- /Empfangskanälen bzw. Kanälen, wobei die Vielzahl größer als 2 ist und der Anzahl der parallelangeordneten Systemen 100 entspricht. Ein zugehöriges Verfahren sieht das Bereitstellen von mehreren Kanälen vor. Ein N Kanal-Messsystem sieht N parallel angeordnete UWB Systeme 100 vor.

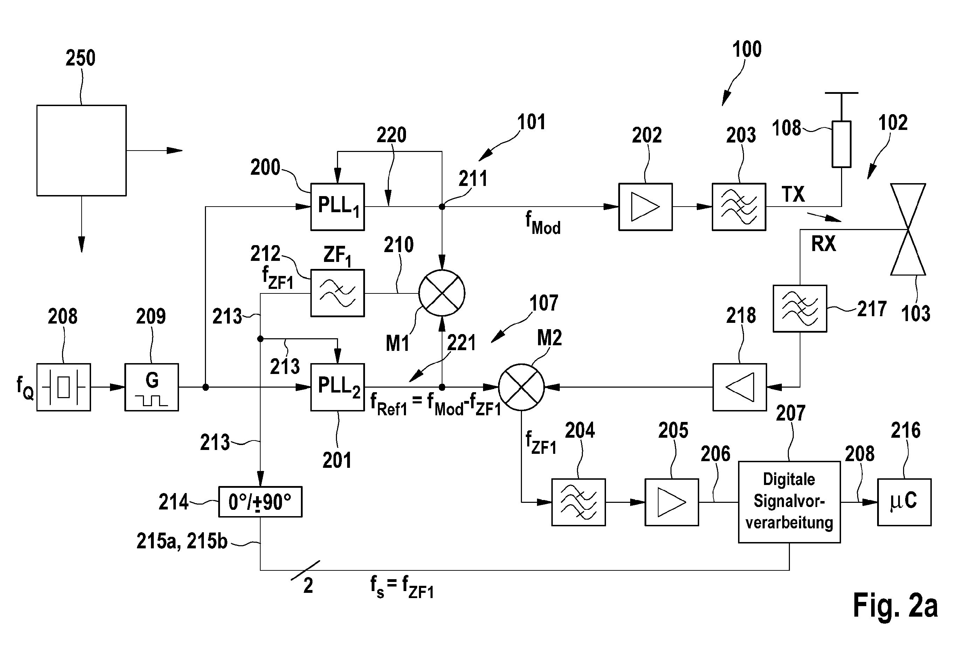

Fig. 2a zeigt ein Blockschaltbild eines einfach heterodynen UWB-Radarsystems. Die Fig. 2a zeigt insbesondere ein Ausführungsbeispiel, bei dem die Nutzinformation aus einem Empfangs-Zwischenfrequenzsignal 206 (liegt im Wesentlichen ungefiltert und unverstärkt am Ausgang des Mischers M2 an) durch das Abtasten (Direktabtastung) mit einem Abtastsignal 215a, 215b wiedergewonnen wird, wobei das Abtastsignal 215a, 215b die selbe Zwischenfrequenz f_{ZF1} wie das Empfangs-Zwischenfrequenzsignal 206 aufweist. Durch diese Anordnung können Phasenfehler der Oszillatoren PLL1, PLL2 eliminiert werden.

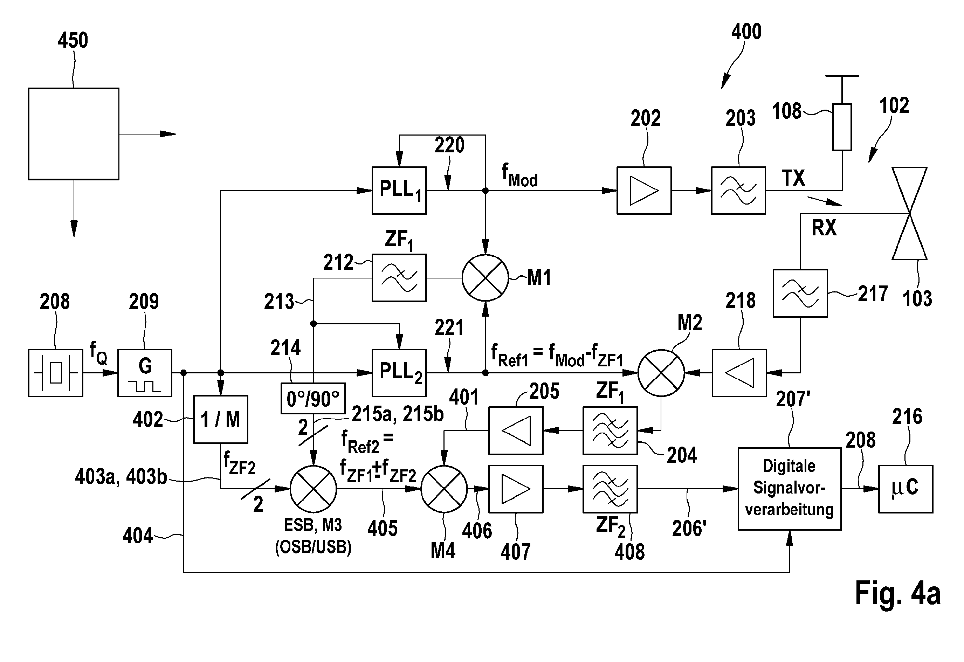

Die Fig. 4a zeigt ein Ausführungsbeispiel, bei dem ein Empfangs-Zwischenfrequenzsignal 401 durch Mischen mit einem weiteren Signal 405, aufweisend eine zweite Referenzfrequenz f_{Ref2}, von einer ersten Zwischenfrequenz f_{Ref1} befreit wird, wobei das weitere Signal 405 die selbe Zwischenfrequenz f_{ZF1} wie das Empfangs-Zwischenfrequenzsignal 401 beinhaltet. Dadurch enthält das bei der Mischung gewonnene Signal im Wesentlichen nicht mehr die erste Zwischenfrequenz f_{ZF1} und folglich können auch durch diese Anordnung Phasenfehler der Oszillatoren PLL1, PLL2 eliminiert werden.

In der Fig. 2a wird das erste Referenzsignal 221 u.a. durch das Mischen der beiden Ausgangssignale 220, 221 der PLLs PLL1, PLL2 oder der Frequenzgeneratoren PLL1, PLL2 erzeugt. Durch das Generieren des Sendesignals TX bzw. des Empfangssignals RX aus dem Ausgangssignal der ersten PLL PLL1 und dem Verwenden des ersten Referenzsignals zur Demodulation und der speziellen Art der Erzeugung der Abtastfrequenz f_{S} der Abtastsignale 215a, 215b gemäß dem Ausführungsbeispiel der Fig. 2a, mag unterschiedliches Einschwingverhalten der PLLs im Wesentlichen nicht zu Phasenfehlern im Messsignal führen. Die spezielle Art der Erzeugung der Abtastfrequenz f_{S} mag bedeuten, dass die Abtastfrequenz gleichfalls die erste Zwischenfrequenz f_{ZF1} aufweist wie das Empfangs-Zwischenfrequenzsignal 206. Folglich heben sich Phasenfehler, die in dem Abtastsignal 215a, 215b und in dem Empfangs-Zwischenfrequenzsignal 206 im Wesentlichen gleichsinnig enthalten sind, gegenseitig auf. Fig. 2a zeigt somit eine Vorrichtung zum direkten Abtasten eines Empfangs-Zwischenfrequenzsignals 206.

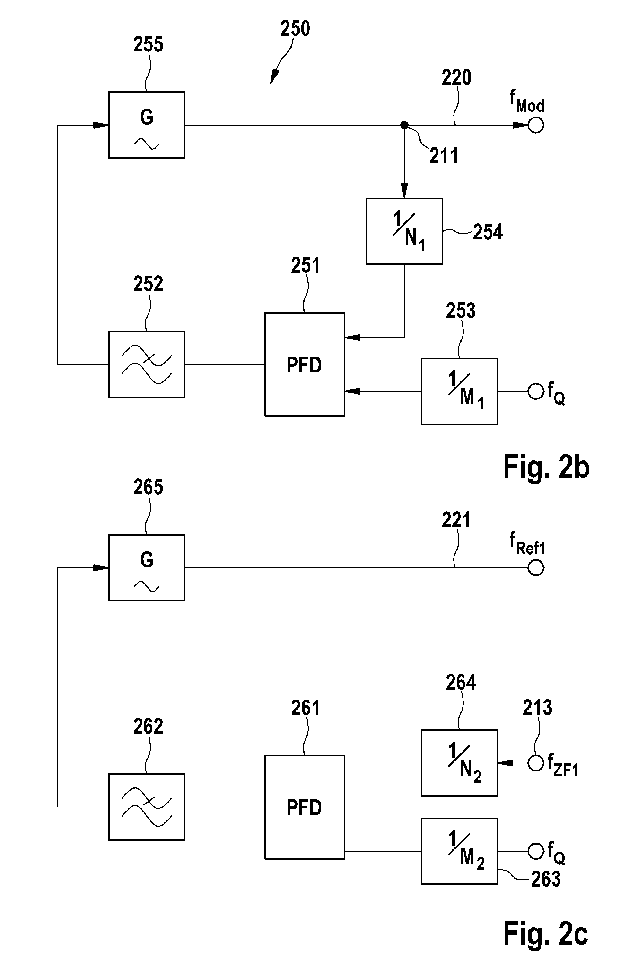

Oder in anderen Worten mag das erste Referenzsignal 221, f_{Ref1} durch Mischen der beiden Ausgangssignale 220, 221 der Frequenzmodulatoren PLL1, PLL2 erzeugt werden. Der Mischer M1 erzeugt ein Signal 213 mit der Differenzfrequenz f_{ZF1} = f_{Mod} - f_{Ref1}. Die Frequenz des Signals ergibt sich aus der Filterung mittels Tiefpass ZF1, 212 aus den beim Mischen erzeugten Frequenzen f_{Mod} - f_{Ref1} und f_{Mod} + f_{Ref1}. Die PLL2 erhält diese Frequenz f_{ZF1} als Eingang 213 und regelt auf diese Frequenz. Damit und, wie detailiert in Fig. 2c beschrieben ist, durch die Teiler mit den Faktoren M2, 263 und N2, 264 wird die Referenzfrequenz f_{Ref1}, 221 festgelegt.

Das erste Referenzsignal 221 dient gleichzeitig zur Mischung, insbesondere zur Herab-Mischung, des Empfangssignals RX auf die Zwischenfrequenz f_{ZF1}. Ferner wird das Signal 213 auf die Aufteile-Einrichtung 214 geleitet wodurch die Abtasttaktsignale 215a, 215b ebenfalls die Zwischenfrequenz f_{ZF1} aufweisen und wodurch insbesondere der Abtasttakt f_{S} mit dem das Zwischenfrequenzsignal 206, insbesondere das Empfangs-Zwischenfrequenzsignal 206, abgetastet wird die Zwischenfrequenz f_{ZF1} enthält.

Folglich ist das Phasenrauschen der Oszillatoren PLL1 und PLL2 gleichförmig sowohl in dem ersten Referenzsignal 221 als auch in dem Abtasttakt f_{S} enthalten, so dass sich das Phasenrauschen beim Abtasten aufhebt. Insbesondere wird durch das Mischen mit Mischer M2 des Empfangssignals Rx mit dem ersten Referenzsignal zumindest ein Teil des Phasenrauschens des Empfangssignals RX eliminiert. Das restliche Phasenrauschen wird im Wesentlichen durch die spezielle Art der Abtastung entsprechend der Fig. 2a eliminiert. Wie bereits beschrieben wurde, wird bei der speziellen Art der Abtastung darauf geachtet, dass die Frequenz des Empfangs-Zwischenfrequenzsignals 206 im Wesentlichen mit der Abtastfrequenz f_{S} übereinstimmt.

Das Sendesignal 220 oder Ausgangssignal 220 der PLL₁ mag ein erstes Phasenrauschen des ersten Oszillators PLL₁ aufweisen. Ein davon zunächst unabhängiges zweites Phasenrauschen weist das erste Referenzsignal 221 oder Ausgangssignal 221 der PLL₂ auf.

Durch das Mischen des Sendesignals 220, TX und des ersten Referenzsignals 221 in dem Mischer M1 entsteht das Mischersignal 210, welches nach dem Tiefpassfilter ZF1, 212 zu dem Zwischenfrequenz-Referenzsignal 213 oder ZF-Referenzsignal 213 wird und welches die erste Zwischenfrequenz f_{ZF1}=f_{Ref1}-f_{Mod}, überlagert von einem Kombinations-Phasenrauschen aufweist. Das Kombinations-Phasenrauschen weist die Überlagerung von dem ersten Phasenrauschen der PLL1 und dem zweiten Phasenrauschen der der PLL2 auf. Das ZF-Referenzsignal dient als Signal 213 sowohl für die Steuerung der PLL2 als auch als Basis für den Abtasttakt f_{S}.

Durch das Mischen des Empfangssignals RX (zeitlich um τ gegenüber dem Sendesignal TX verschoben aber wie das Sendesignal TX mit der Frequenz f_{Mod}) und des ersten Referenzsignals 221 in dem Mischer M2 entsteht nach dem Filtern 204 und Verstärken 205 das Zwischenfrequenz-Empfangssignal 206 oder ZF-Empfangssignal 206, welches die erste Zwischenfrequenz f_{ZF1}=f_{Ref1}-f_{Mod} und ein Kombinations-Phasenrauschen aus dem ersten Phasenrauschen der PLL1 und dem zweiten Phasenrauschen der der PLL2 aufweist. Allgemein mag auch das Ausgangssignal des Mischers M2 als Zwischenfrequenz-Empfangssignal 206 bezeichnet werden.

Somit weisen das ZF-Referenzsignal 210, 213, 215a, 215b und das ZF-Empfangssignal 206 im Wesentlichen ein gleichartiges Phasenrauschen, d.h. das Kombinations-Phasenrauschen, auf und sind somit korreliert, obwohl das Phasenrauschen der PLLs PLL₁, PLL₂ nicht korreliert ist. Zumindest ist das Kombinations-Phasenrauschen des ZF-Referenzsignals 210, 213, 215a, 215b und des ZF-Empfangssignals 206 für Empfangssignale mit geringen Laufzeiten τ im Wesentlichen korreliert. Folglich wird ein ZF-Empfangssignal 206 mit jeweils einem Abtastsignal 215a, 215b abgetastet, dessen Phasenrauschen mit dem Phasenrauschen des ZF-Empfangssignal im Wesentlichen korreliert ist.

Das endgültige Empfangssignal 206, 206' besitzt aufgrund der Struktur des Empfängers 107, nach der Abtastung in der digitalen Signalvorverarbeitung 207 mit f_{S}, die Eigenschaften des unterdrückten Phasenrauschens. Da das erste Referenzsignal 221 eine gegenüber der Sendefrequenz f_{Mod} um f_{ZF1} verschobene Frequenz aufweist wird durch Mischen des Referenzsignals 221 mit dem Empfangssignal der Frequenz f_{Mod} die Sende-/Empfangsfrequenz f_{Mod} im Wesentlichen auf die Zwischenfrequenz f_{ZF1} umgesetzt.

Damit bleibt im Wesentlichen das erste Zwischenfrequenz-Empfangssignal 206 mit dem Kombinations-Phasenrauschen der beiden Frequenzgeneratoren PLL1, PLL2 übrig.

Das Phasenrauschen der zwei oder der Mehrzahl von Frequenzgeneratoren PLL1, PLL2 im Zwischenfrequenzsignal 206 kann folglich auf zumindest zwei Arten eliminiert werden.

Einerseits kann das Zwischenfrequenzsignal 206 mit einem Abtastsignal 215a, 215b abgetastet werden, in dem ebenfalls gleichsinnig die erste Zwischenfrequenz f_{ZF1} mit dem Kombinations-Phasenrauschen enthalten ist.

Oder das Zwischenfrequenzsignal 401 kann mit einem Signal 405 gemischt werden, das aus einer stabilisierten zweiten Zwischenfrequenz f_{ZF2} und der ersten Zwischenfrequenz f_{ZF1} gebildet worden ist. Darauf wird in Fig. 4a eingegangen.

Der breite Frequenzbereich eines UWB-Signals mag ein Signal über sehr viele Frequenzen verteilen und dadurch zuverlässiger sein als ein vergleichbar schmalbandiges Signal, da der Ausfall oder die Störung einzelner Frequenzen gegenüber der Gesamtbandbreite im Wesentlichen nicht ins Gewicht fallen mag. Die eingesetzte Frequenz mag von der Anwendung abhängen. So mag ein 20 GHz-Signal weniger für das Messen von Rohren in einer Wand geeignet sein als ein 1 GHz-Signal, da in einer Wand ein 20 GHz-Signal einer hohen Dämpfung unterliegen kann. Je höher die Bandbreite ist, desto besser kann die UWB-Vorrichtung 100 auflösen, d.h. umso dünnere Schichten können untersucht werden. Beispielsweise kann ein 1 GHz Signal eine optische Auflösung von 15cm erreichen. Ein 2 GHz Signal erreicht bereits eine Auflösung von 7,5 cm, d.h. Objekte in einem Abstand von 7,5 cm zueinander können aufgelöst werden. Die Auflösung ist also umgekehrt proportional zu der eingesetzten Frequenz der PLLs.

Es mag also in anderen Worten ein Verfahren und eine Vorrichtung zum Bereitstellen eines Reflexionssignals geschaffen werden, wobei ein erstes Referenzsignal 221 durch Mischen M2 von zwei Ausgangssignalen 220, 221 von Frequenzgeneratoren PLL1, PLL2 erzeugt wird und wobei das erste Referenzsignal 221 zur Demodulation M2 eines Empfangssignals RX dient.

Wie bereits erwähnt, weist ein heterodynes Radarsystem zwei Oszillatoren auf. Die PLL1, 200 oder PLL₁, 200 ist Teil der Sendesignal-Einrichtung 101 oder des Senders 101. Die Offset-PLL PLL2 201 oder PLL₂ 201 erzeugt das Referenzsignal f_{Ref1} des Empfängers 107.

Das einfach heterodyne UWB-Radarsystem 100 weist einen ersten geregelten Hochfrequenzoszillator PLL1, 200 zur Erzeugung der stufenförmigen Modulationsrampe 300 mit der Frequenz f_{Mod} auf. Das Ausgangssignal 220 der PLL1, 200 wird über einen Ausgangsverstärker 202 und die Sende- /Empfangsweiche 102 oder Richtkoppler 102 und den Tiefpass 203 der Antenne 103 zugeführt und gesendet. Der Tiefpass 203 dient der Unterdrückung unerwünschter Oberwellen.

Der erste Hochfrequenzoszillator PLL1, 200 ist in der Sende-Einrichtung 101 enthalten.

Der zweite geregelte Hochfrequenzoszillator PLL2, 201 ist in der Empfangs-Einrichtung 107 enthalten und erzeugt das erste Referenzsignal f_{Ref1}. Die Frequenz des Referenzsignals f_{ref1} ist eine um f_{ZF1} gegenüber der Frequenz des Sendesignals f_{mod} frequenzverschobene Rampe.

Das Empfangssignal RX, welches wie das Sendesignal TX die Frequenz f_{Mod} aufweist, wird mit dem Referenzsignal f_{Ref1} in dem Mischer M2 gemischt und einem ersten Zwischenfrequenzfilter 204 und einem Verstärker 205 zugeführt. Das Empfangssignal RX wird durch das Mischen im Mischer M2 und dem als Bandpass- oder Tiefpassfilter ausgeführten ersten Zwischenfrequenzfilter 204 als ein mit der Frequenz f_{ZF1} geträgertes Empfangssignal oder als Empfangs-Zwischenfrequenzsignal an der Schnittstelle 206 der digitalen Signalvorverarbeitung 207 bereitgestellt. In anderen Worten wird durch den Mischer M2, da f_{Ref1} die Modulationsfrequenz f_{Mod} ebenso wie das Empfangssignal RX die Modulationsfrequenz f_{Mod} enthält, durch die von dem Mischer im Frequenzbereich durchgeführte Faltung von f_{Mod} auf die Zwischenfrequenz f_{ZF1} umgesetzt. Durch diese Umsetzung ist das Empfangssignal nun statt mit f_{Mod} mit f_{ZF1} geträgert. Geträgert bedeutet in diesem Zusammenhang, dass f_{ZF1} die Zwischenfrequenz oder Trägerfrequenz für das Nutzsignal RX darstellt.

Wie der Fig. 2a zu entnehmen ist, wird der digitalen Signalvorverarbeitung 207 an der Schnittstelle 206 direkt ein mit der Frequenz f_{ZF1} geträgertes Empfangssignal 206 zur Verfügung gestellt. Es ist demnach zu erkennen, dass im Wesentlichen keine analoge (d.h. im Wesentlichen mit analogen Bauteilen) Umsetzung des geträgerten Empfangssignals in das Basisband durchgeführt wird, sondern dass die digitale Signalvorverarbeitung 207 direkt auf das geträgerte Nutzsignal RX zugreift. Bei einer Direktabtastung wird also direkt auf ein geträgertes Signal 206 zugegriffen.

Die Frequenzregelung im ersten Hochfrequenzoszillator PLL1, 200 ist mit Hilfe einer Standard-PLL-Schaltung realisiert. Bei dieser Standard-PLL-Schaltung wird das Hochfrequenzsignal f_{Mod} über einen Frequenzteiler und einen Phasendetektor (PFD) auf die externe Quarzfrequenz f_{Q} 208 geregelt. Der Frequenzteiler und der Phasendetektor der PLL1 sind in Fig. 2a nicht dargestellt. Die externe Quarzreferenz f_{Q} wird über den Taktgenerator G, 209 in ein Taktsignal oder Rechtecksignal gewandelt und über die gezeigte Verbindung der PLL1 zur Verfügung gestellt.

Das Taktsignal aus dem Taktgenerator 209 wird parallel auch der PLL2 zur Verfügung gestellt. Somit laufen oder basieren die PLL1 und die PLL2 im Wesentlichen auf demselben Takt, allerdings mit einem entsprechenden Frequenz-Offset, der der ersten Zwischenfrequenz f_{ZF1} entspricht.

Bei dem zweiten Hochfrequenzoszillator PLL2 ist kein hochfrequenter Frequenzteiler notwendig, da der zweite Hochfrequenzoszillator PLL2, 201 über die Quarzfrequenz f_{Q} und das Mischsignal ZF₁, 210 mit der Frequenz f_{ZF1}, welches am Ausgang des Mischers M1 anliegt, auf die gewünschte Referenzfrequenz f_{Ref1} geregelt werden kann. Das Mischsignal ZF₁ mag im MHz-Bereich liegen, während die stufenförmige Modulation der PLL1, 200 als UWB-Signal in einem unteren GHz-Bereich liegen mag.

Das Signal 213 weist nach der Tiefpassfilterung 212 im Wesentlichen die tatsächliche Zwischenfrequenz f_{ZF1} auf, die insbesondere beim Einschwingen der beiden PLLs PLL1, PLL2 auch etwas von der Soll-ZF Frequenz f_{ZF1} abweichen kann.

Somit stellt der Frequenzverlauf der PLL2, in einer vorzugsweisen Ausführungsvariante der Erfindung, eine um die Zwischenfrequenz f_{ZF1} verschobene Rampe 300 dar.

Von dem Kopplungspunkt 211 wird das Sendesignal TX mit der Modulationsfrequenz f_{Mod} oder Sendefrequenz f_{Mod} sowohl in Richtung der Antenne 103 geleitet, aber auch zur Regelung der Phase der PLL1, 200 an die PLL1 zurückgeleitet. Ferner wird ein Signal der Frequenz f_{Mod} an den Mischer M1 geleitet. In dem Mischer M1 wird das Sendesignal der Frequenz f_{Mod} mit dem Referenzsignal der Frequenz f_{Ref1} = f_{Mod} - f_{ZF1} gemischt, wodurch sich im Frequenzbereich nach der Tiefpassfilterung mittels des Tiefpasses ZF₁, 212 ein Signal ergibt, welches lediglich die Frequenz f_{ZF1} aufweist. Dieses Tiefpass gefilterte Signal wird als Steuersignal für die PLL2, 201 genommen, um die um die Frequenz f_{ZF1} verschobene Treppenfunktion der PLL2 zu erhalten. In anderen Worten entspricht die Ausgangs- Funktion oder der Ausgangsfrequenzverlauf der PLL1, 200 und der PLL2, 201 der stufenförmigen Rampe 300, welche an der PLL1 geregelt wird.

Da aufgrund der inneren Verschaltung der PLL2, 201 der Ferquenzverlauf des Signals der PLL2 dem Frequenzverlauf 300 des Signals der PLL1 entspricht, welche lediglich um die über Tiefpass ZF₁, 212 gefilterte Verschiebungsfrequenz f_{ZF1} oder Zwischenfrequenz f_{ZF1} verschoben ist, läuft die stufenförmige Rampe 300 der PLL2 der stufenförmigen Rampe 300 der PLL1 im Frequenzbereich um f_{ZF1} nach bzw. weist eine entsprechend höhere oder niedrigere Frequenz auf. Während also das Sendesignal TX auf die Modulationsfrequenz f_{mod} einschwingt, welche der jeweils aktuellen Stufe der stufenförmigen Rampe 300 entspricht, erzeugt die PLL2 ein Referenzsignal f_{Ref1} mit einer um f_{ZF1} reduzierten oder erhöhten Frequenz. Die Frequenz f_{ZF1} stellt somit einen Offset für die stufenförmige Rampe 300 dar, welcher die für die PLL2 gültige stufenförmige Rampe 300 um den Betrag des Offsets entlang der Frequenzachse verschiebt.

Das mittels des Tiefpass ZF₁, 212 erzeugte Zwischenfrequenzsignal wird über die Verbindung 213 auf eine Aufteile-Einrichtung 214 weitergeleitet. Die Aufteile-Einrichtung 214 teilt das Zwischenfrequenzsignal mit der Frequenz f_{ZF1} in zwei im Wesentlichen entweder um +90° oder -90° zueinander phasenverschobene Signale mit der tatsächlichen Differenzfrequenz f_{ZF1} bzw. Zwischenfrequenz f_{ZF1} auf. Oder in anderen Worten ausgedrückt, werden durch die Aufteile-Einrichtung 214 zwei physikalisch parallele Signale 215a und 215b erzeugt, wobei die Signale in den Signalwegen 215a und 215b die Zwischenfrequenz f_{ZF1} oder die Abtastfrequenz oder Samplingfrequenz fₛ = f_{ZF1} für die A/D (Analog/Digital) Wandlung in der digitalen Signalvorverarbeitung 207 aufweisen. Die Signale in den parallelen Kanälen 215a, 215b sind jedoch um +/- 90° zeitlich zueinander verschoben bzw. weisen eine Phase von +/- 90° zueinander auf. In anderen Worten, bezogen auf eine Phase von 0° in einem Kanal 215a hat der andere Kanal 215b eine Phase von +90° oder von -90°. Die Signale in den parallelen Zweigen 215a, 215b weisen eine Phasenverschiebung von +/-90° zueinander auf.

Diese parallelen gegeneinander verschobenen Signale können der digitalen Signalvorverarbeitung 207 zugeführt werden, um das ebenfalls mit der Zwischenfrequenz f_{ZF1} an dem Ausgang 206 erhaltene Empfangssignal 206 in eine In-Phase-Komponente I und eine Quadratur-Komponente Q zu zerlegen oder zu demodulieren. Da sowohl das Empfangs-Zwischenfrequenzsignal 206 auf der Leitung 206 als auch das erste Abtastsignal und das zweite Abtastsignal in den Kanälen 215a und 215b die im Wesentlichen tatsächliche Zwischenfrequenz f_{ZF1} aufweisen, erfolgt die Digitalisierung in der digitalen Signalvorverarbeitung 207 mit dem Bandpasssignal 206 oder auf ZF-Ebene.

Hier sei angemerkt, dass allgemein in diesem Text mit den Bezugsziffern von Verbindungen oder Schnittstellen, wie beispielsweise der Bezugsziffer 206, auch ein von der jeweiligen Verbindung geführtes Signal bezeichnet sein kann.

Das von der digitalen Signalvorverarbeitung 207 erzeugte Signal kann der Datenverarbeitungseinheit 216 oder dem Mikrocontroller (µC) 216 zur weiteren Verarbeitung zur Verfügung gestellt werden.

Fig. 2b zeigt den Aufbau der PLL1. Die stabilisierte Quarzfrequenz f_{Q} wird dem 1/M1 Teiler 253 zur Verfügung gestellt und an den Phasen Frequenz Detektor 251 weitergeleitet. Der Phasen Frequenz Detektor (PFD) 251 erhält auch das über den Hochfrequenz 1/N1 Teiler 254 zurückgekoppelte Sendesignal 220 mit der Sendefrequenz f_{Mod}. (Das von dem Knotenpunkt 211 auf den Mischer M1 geführte Signal ist in Fig. 2b nicht gezeigt). Das zeitlich veränderbare Verhältnis der programmierbaren ganzzahligen Teilerkoeffizienten N1 und M1 bestimmt den Frequenzverlauf der PLL. Durch eine digitale Steuerung 250, 450 lassen sich die Koeffzienten derart ändern, dass über den Zeitverlauf die in Fig. 3 dargestellt Rampe 300 durchfahren wird, d.h. über den Zeitverlauf werden die zugehörigen Frequenzen eingenommen.

Nach der PFD 251 gelangt das Signal an das Loop Filter 252, das bestimmt, wie schnell das Einschwingen bei einem Sprung zwischen den Stufen f1, f2 der Rampe erfolgt.

Der Generator 255 erzeugt das Sendesignal 220 mit der Frequenz f_{Mod}. Über den Teiler 254 erhält der PFD 251 ein hochfrequentes Signal im GHz Bereich. Über den Teiler 253 erhält der PFD 253 ein Signal einer niedrigen (im MHz Bereich liegenden) Frequenz f_{Q} des Quarz 208.

Der zweite Frequenzgenerator PLL2 ist in Fig. 2c dargestellt. Der 1/N2 Teiler 264 erhält kein von der PLL PLL2 zurückgekoppeltes Signal sondern das ZF Signal 213 mit der Frequenz f_{ZF1}. Diese Frequenz f_{ZF1} liegt im MHz Bereich. In anderen Worten weist das erste Referenzsignal 221 eine Frequenz f_{Ref1} auf, die eine um die erste Zwischenfrequenz f_{ZF1} verschobene Sendefrequenz f_{Mod} ist.

Der 1/M2 Teiler 263 erhält das stabilisierte Quarz Signal f_{Q}, das auch im MHz Bereich liegt. Die Ausgänge der Teiler 263, 264 sind mit dem PFD 261 verbunden. Die Teilerkoeffizienten M2 und N2 sind ganzzahlig und programmierbar, beispielsweise über die digitale Steuerung 250, 450. Da der Teiler 264 das ZF Signal 213 erhält, regelt er auf die ZF Frequenz f_{ZF1}. Der Wert der ZF1 d.h. der Wert der Verschiebung gegenüber dem Frequenzverlauf 300 der PLL1 wird durch die Wahl der Koeffizienten M2, N2 festgelegt.

Das Ausgangssignal der PFD 261 gelangt auf das Loopfilter 262 und von dort auf den Generator 265, der beispielsweise den rampenförmigen Verlauf des ersten Referenzsignals 221 der PLL2 bestimmt. Dabei läuft die PLL2 der PLL1 nach.

Da die Frequenz f_{Mod} des Sendesignals einen rampenförmigen Frequenzverlauf 300 gemäß Fig. 3 aufweist und da es sich bei der Zwischenfrequenz f_{ZF1} um eine im Wesentlichen konstante Frequenz handelt, weist nach der Differenzbildung f_{Ref1} = f_{Mod} - f_{ZF1} auch der zeitliche Verlauf der Referenzfrequenz f_{Ref1} einen rampenförmigen Verlauf auf. Der in Fig. 3 dargestellte zeitliche Frequenzverlauf kann auch als Frequenzmodulation 300 bezeichnet werden. Wie in der Fig. 2b näher erläutert wird kann diese Frequenzmodulation 300 durch das zeitliche Verstellen der Teilerkoeffizienten N1 und/oder M1 erreicht werden.

Das zeitliche Verstellen der Teilerkoeffizienten N1 254 und/oder M1 253 aber auch der Teilerkoeffizienten N2 264 und/oder M2 263 kann mit entsprechend eingerichteten Steuerungen 250, 450 erreicht werden.

Der Teiler 264 arbeitet auf einer geringeren Frequenz als der Teiler 254, was zu einer geringeren Leistungsaufnahme des Teilers 264 gegenüber dem Teiler 254 führt.

Die Fig. 4a zeigt ein schematisches Blockschaltbild eines doppelt heterodynen UWB-Radarsystems. Der Aufbau entspricht im Wesentlichen dem Aufbau des einfach heterodynen UWB-Radarsystems gemäß Fig. 2a. Jedoch weist das doppelt heterodyne Radarsystem 400 eine zweite Umsetzung des Empfangssignals in eine zweite Zwischenfrequenz f_{ZF2} auf. Die zweite Zwischenfrequenz f_{ZF2} ist niedriger als die erste Zwischenfrequenz f_{ZF1}. Wegen der zusätzlichen Umsetzung weist das doppelt heterodyne Radarsystem gegenüber dem einfach heterodynem System jedoch weitere Bauteile in dem HF-Analogteil auf, das heißt in der Schaltung vor der digitalen Signalvorverarbeitung 207'.

Das Empfangssignal RX durchläuft ebenfalls den Tiefpassfilter 217 und die Verstärkung 218 bevor es auf dem Mischer M2 mit dem von der PLL2 erzeugten Referenzsignal f_{Ref1} gemischt wird. Das von dem Mischer M2 erzeugte Empfangs-Zwischenfrequenzsignal oder ZF-Empfangssignal, welches nun mit dem Träger ZF₁ versehen ist, wird über den Anschluss 401 dem Mischer M4 zur Verfügung gestellt. Die von der Aufteile-Einrichtung 214 erzeugten Signale in den zwei Kanälen 215a, 215b werden jedoch nicht wie im einfach heterodynem Fall direkt der digitalen Signalvorverarbeitung 207 als ein Taktsignal zur Verfügung gestellt. Vielmehr werden diese beiden Signale 215a, 215b bei dem doppelt heterodynen System einem Einseitenbandmischer (ESB) M3 zur Verfügung gestellt, welcher sich entweder auf das untere Seitenband (USB) oder das obere Seitenband (OSB) beziehen kann.

Durch Teilung mit dem Teilungsglied 402 wird das von dem Taktgenerator 209 generierte Taktsignal als zweites Zwischenfrequenzsignal mit der Frequenz f_{ZF2} auf den beiden Kanälen 403a, 403b mit einer Phasendifferenz von 90° der beiden Signale zueinander dem Mischer M3 zur Verfügung gestellt. Die Zwischenfrequenz f_{ZF2} wird also durch Teilung der Quarzfrequenz f_{Q} mit dem Faktor M abgeleitet. Der Quarz 208 ist das frequenzstabilisierende Element. Der Frequenzgenerator 209, G, beispielsweise ein Rechteckfrequenzgenerator, erzeugt die Frequenz f_{Q}, die sämtlichen Signalen des UWB Radarsystems 100 zugrunde liegt, beispielsweise auch dem Taktsignal 404 für die digitale Vorverarbeitung 207'.

Die Teilung in dem Frequenzteiler 402 erfolgt so, dass zwei um 1/4 Takt oder 90° zeitlich zueinander verschobene Takte erzeugt werden. In anderen Worten wird in dem Teiler 402 nicht nur eine Parallelisierung des Taktsignals durchgeführt, sondern gleichzeitig, vergleichbar mit der Aufteile-Einrichtung 214, eine Verschiebung der Zeitsignale um 1/4 Takt, um 90° oder um π/2 erzeugt.

Die Quarzfrequenz f_{Q} wird auch über die Leitung 404 verteilt und dient als Takt für die digitale Signalvorverarbeitung 207', die das mit der zweiten Zwischenfrequenz f_{ZF2} geträgerte Empfangssignal RX 206' oder das mit der zweiten Zwischenfrequenz f_{ZF2} geträgerte Empfangs-Zwischefrequenzsignal 206' digitalisiert und vorverarbeitet. Insbesondere demoduliert die Signalvorverarbeitung 207' das Empfangssignal RX.

Die parallelen Kanäle 215a, 215b, die das Signal mit der Zwischenfrequenz f_{ZF1} enthalten und die parallelen Kanäle 403a, 403b, welche das in der Frequenz reduzierte zweite Zwischenfrequenzsignal mit der Frequenz f_{ZF2} enthalten, werden über den Einseitenbandmischer M3 in das zweite Referenzsignal f_{Ref2} 405 umgesetzt, welches die Frequenz f_{Ref2} = f_{ZF1} +/- f_{ZF2} aufweist. Das zweite Referenzsignal kann also die Frequenz f_{Ref2} = f_{ZF1} + f_{ZF2} oder f_{Ref2} = f_{ZF1} - f_{ZF2} aufweisen. In anderen Worten, die zweite Referenzfrequenz ist gegenüber der ersten Referenzfrequenz verschoben, also entweder größer oder kleiner als die erste Referenzfrequenz. D.h. die erste Referenzfrequenz und die zweite Referenzfrequenz sind ungleich. Das zweite Referenzsignal 405 mit der zweiten Referenzfrequenz f_{ZF2} wird auf einem einzigen Kanal zur Verfügung gestellt. Das heißt, dass von dem Mischer M3 die parallelen Kanäle 215a, 215b, 403a, 403b auf einen Kanal zusammengefasst wurden.

Beim Mischen von Signalen, beispielsweise in den Mischern M1, M2, M4, können Signale mit den Frequenzpaaren f1-f2 und f1+f2 entstehen, also beispielsweise f_{Mod}-f_{Ref1} und f_{Mod}+f_{Ref1}. Daher mag jedes Mischen auch ein Filtern mit einem zugehörigen Filter aufweisen, um nur eines der Frequenzpaare bereitzustellen, beispielsweise das Filtern mit dem Filter 212, 204, 208.

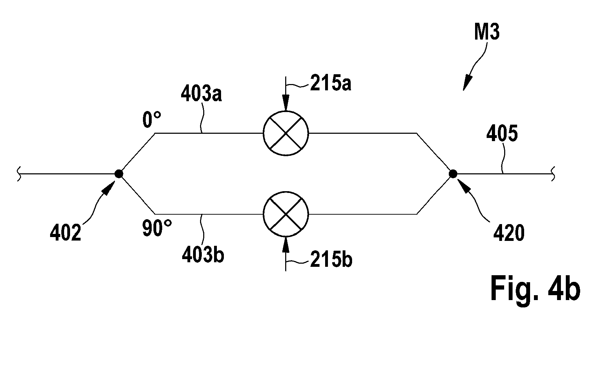

Die Funktionsweise eines Einseitenbandmischer (ESB) oder Singlesidebandmischer (SSB) ist in Fig. 4b dargestellt. Der Teiler 1/M 402 stellt in einem Kanal 403a ein Signal mit der zweiten Zwischenfrequenz und in dem anderen Kanal 403b ein Signal mit einer um +90° oder -90° gegenüber dem ersten Kanal 403a verschobenen Phase zur Verfügung (In Fig. 4b ist ein um +90° verschobenes Signal gezeigt). Die beiden Signale 403a, 403b werden jeweils mit einem Signal 215a aufweisend die erste Zwischenfrequenz, und einem Signal 215b aufweisend ebenfalls die erste Zwischenfrequenz und eine um entweder +90° oder -90° gegenüber der Phasenlage des Signals 215a verschobene Phasenlage, gemischt und mittels eines Summierglieds 420 auf einer Leitung 405 zusammengefasst, so dass das zweite Referenzsignal mit der zweiten Referenzfrequenz f_{Ref2}=f_{ZF1}+f_{ZF2} oder f_{Ref2}=f_{ZF1}-f_{ZF2} entsteht.

In dem Mischer M4 wird das zweite Referenzsignal mit der Frequenz f_{Ref2} mit dem mit f_{ZF1} geträgertem Empfangssignal RX, 401 gemischt und an dem Ausgang 406 des Mischers M4 wird das Empfangssignal mit nunmehr der zweiten Zwischenfrequenz f_{ZF2} geträgert bereitgestellt. In anderen Worten heißt das, dass mittels des Einseitenbandmischers M3 in Kombination mit dem weiteren Mischer M4 und dem Bandpass (BP) Filter 408 das Empfangssignal RX auf die zweite niedrigere Zwischenfrequenz f_{ZF2} < f_{ZF1} umgesetzt wird. Dieses mit f_{ZF2} geträgerte Empfangssignal 406 kann über eine Verstärkung 407 und ein für ZF₂ angepasstes Bandpassfilter 408 über den Ausgang 206' der digitalen Signalvorverarbeitung 207' zur Verfügung gestellt werden. Die Reihenfolge der Verstärkung 407 und des Bandpassfilters 408 kann vertauscht sein. Das Ergebnis des in der digitalen Signalvorverarbeitung 207' vorverarbeiteten Messsignals wird dann zum Beispiel über eine SPI-Schnittstelle (Serial Peripheral Interface) 208 an eine nachfolgende Ansteuereinheit und/oder Datenverarbeitungseinheit µC oder den Mikrocontroller 216 übertragen.

Durch die spezielle Art der Erzeugung der beiden Referenzsignale f_{Ref1} und f_{Ref2} und der Demodulation des Empfangssignals RX kann vermieden werden, dass Einschwingeffekte der beiden PLLs PLL1, PLL2 sich auf die Phasenlage des demodulierten Empfangssignals RX auswirken und der Einfluss von Phasenrauschen der PLLs PLL1 und PLL2 kann minimiert werden. In anderen Worten bedeutet das, dass das Phasenrauschen der Oszillatoren oder der PLLs PLL1, PLL2 zwar nicht miteinander korreliert ist. Jedoch, dadurch dass die beiden Signale 401, 405, die beide die Frequenz f_{ZF1} und damit im Wesentlichen gleiche Phasenfehler, insbesondere gleiche Kombinationsphasenfehler aufweisen, miteinander gemischt werden, kompensieren sich die gleichen Phasenfehler weitgehend. Die Signale 401, 405 basieren auf Signalen, die sich auf unterschiedlichen Wegen inerhalb desRadarsystems 100, 400 ausbreiten. Dadurch sind die Signale 401, 405 im Wesentlichen lediglich um eine Laufzeit τ des Radarsignals in dem Radarkanal gegeneinander zeitlich verschoben. τ mag die Laufzeit vom Aussenden eines Signals TX bis zum Empfangen eines Signals RX sein. Je geringer die Laufzeit τ ist desto besser mag die Korrelation der beiden Signale 401, 405 sein. In dem Grenzfall dass die Laufzeit τ = 0 ist, sind die Signale 401, 405 im Wesentlichen zeitlich betrachtet identisch.

Das Phasenrauschen in den Signalen 401 und 405 ist im Wesentlichen näherungsweise korreliert da es auf gleiche Signale zurückgeht. Daher wirken sich Phasenfehler gleichartig in den unterschiedlichen Zweigen der Schaltung aus und heben sich im Wesentlichen gegeneinander auf. Somit erhält man im Wesentlichen kohärente Signale mit einheitlicher Phasenlage, die ein gutes Signal-zu-Rausch-Verhältnis ermöglichen.

Das UWB-Messsystem 100, 400 liefert am Ausgang 208 das vom Messobjekt 104 reflektierte Sendesignal RX in Abhängigkeit von der Modulationsfrequenz f_{Mod} bzw. von der Sendefrequenz f_{Mod} an die nachfolgende Datenverarbeitungseinheit 216. Das Empfangssignal RX weist ebenfalls die Sendefrequenz f_{Mod} auf. Das Empfangssignal RX hat eine Signalbandbreite vorzugsweise im kHz Bereich.

Die Sende-/Empfangsentkopplung bzw. Sende-/Empfangstrennung geschieht mit Hilfe eines Richtkopplers 102. Der Richtkoppler 102 leitet das Empfangssignal RX von der Antenne 103 mit einer minimalen Dämpfung in den Empfänger 107 weiter. In Senderichtung, das heißt von PLL1 in Richtung Antenne 103, wird das Sendesignal TX mit typischerweise 6 d B Dämpfung in die Antenne eingekoppelt. Das nicht in die Antenne eingekoppelte Sendesignal wird an dem Abschlusswiderstand 108 terminiert.

In einem weiteren exemplarischen Ausführungsbeispiel des UWB-Systems, also beispielsweise des einfach heterodynen UWB-Systems oder des doppelt heterodynen UWB-Systems, kann die Sendeleistung mit Hilfe eines einstellbaren Sendeverstärkers variiert werden. Beispielsweise kann der Sendeverstärker 202 mit einer einstellbaren Verstärkung ausgebildet sein. Diese Massnahme erlaubt die Anpassung an spezifische Gegebenheiten, insbesondere an Zulassungsvorschriften, die nur eine bestimmte Sendeleistung in Abhängigkeit von der Betriebsfrequenz f_{Mod} erlauben.

In einem weiteren exemplarischen Ausführungsbeispiel der vorliegenden Erfindung können mehrere Sendekanäle und/oder Empfangskanäle vorgesehen werden, die einen gleichzeitigen Betrieb mehrerer Antennen 103 oder eines Antennenarrays (zum Beispiel mit unterschiedlicher Polarisation) erlauben. Mehrere Antennen können beispielsweise bei der Materialerkennung oder bei Leitungsdetektoren zu besseren Ergebnissen führen.

Die stufenförmige Modulation f_{Mod} ist so ausgebildet, dass sie von außen messbar ist.

Es mag ein Aspekt der Erfindung sein, ein Ultrabreitband-Radarsystem mit einer Modulations-PLL PLL1 und einer Offset-PLL PLL2 und einer zweistufigen (doppelt heterodynen) Umsetzung des Empfangssignals RX auf eine zweite niedrigere Zwischenfrequenz f_{ZF2} unter Nutzung der tatsächlichen Differenzfrequenz f_{ZF1} = ± (f_{Mod} - f_{Ref1}) beider PLLs PLL1, PLL2 zu schaffen. Das Zwischenfrequenz-Referenzsignal 213 weist die Frequenz f_{ZF1} auf. Das Empfangssignal nach dem Mischen mit dem Mischer M2, also das Empfangs-Zwischenfrequenzsignal, weist ebenfalls die Frequenz f_{ZF1} auf. Das Signal 213 kann als interne Referenz gegenüber dem veränderlichen Empfangssignal RX oder Rx dienen. Das Empfangssignal kann auf seinem Weg in dem Radarkanal 105, 106 verändert worden sein. Das Signal 213 kann helfen den Unterschied zwischen dem Signal 213 und dem Empfangssignal Rx aufzuzeigen.

Ferner mag ein Aspekt der vorliegenden Erfindung sein, ein Ultrabreitband-Radarsystem zu schaffen mit einer Modulations-PLL PLL1, einer Offset-PLL, PLL2 und einer einstufigen (einfach heterodynen) Umsetzung des Empfangssignals RX auf eine erste Zwischenfrequenz f_{ZF1} und dabei die tatsächliche Differenzfrequenz f_{ZF1} beider PLLs für die Taktung der digitalen Signalvorverarbeitung 207 zu nutzen.

Die Aufteilung des Taktsignals in die zwei Kanäle 215a, 215b im einfach heterodynen Fall erlaubt es, ein Empfangssignal 206 auf einer hohen Zwischenfrequenz direkt zu verarbeiten, indem innerhalb der digitalen Signalvorverarbeitung 207 eine Zerlegung des hochfrequenten ZF-Signals in zwei Signalkomponenten I und Q erfolgt. Dadurch kann eine zweite Mischerstufe vermieden werden. Zum Abtasten des hochfrequenten ZF-Signals ist jedoch ein schneller A/D Wandler nötig. Zum Abtasten könnten also hochwertige A/D Wandler nötig sein, an die hohe Anforderungen gestellt werden.

Andererseits erlaubt es im Falle des zweifach heterodynen UWB-Radarsystems die Umsetzung auf eine geringe Zwischenfrequenz f_{ZF2} ohne parallele Zerlegung direkt auf das mit der niedrigen Zwischenfrequenz f_{ZF2} geträgerte Signal zurückzugreifen. Damit kann die Digitalisierung mit nur einem einzigen Analog/Digital-Wandler, an den geringe Anforderungen gestellt werden, erfolgen und eine Aufteilung in die I/Q-Komponenten kann wiederum auf digitaler Ebene erfolgen.

Es mag also vorgesehen sein, zumindest zwei ZF Signale, also zumindest zwei Signale mit der Frequenz f_{ZF1}, zu erzeugen und diese auf unterschiedlichen Wegen in der Schaltung zu verteilen. Durch das Ausbreiten der Signale auf unterschiedlichen Wegen kann ein Referenzsignal mit einem Empfangssignal verglichen werden. Andererseits können die beiden Signale beispielsweise durch Abtasten oder Mischen so kombiniert werden, dass ein gleichförmig in beiden Signalen vorhandener Phasenfehler eliminiert werden kann.

So kann ein mit f_{ZF1} geträgertes Empfangssignal 206 mit einem ZF Signal 215a, 215b abgetastet werden. Dabei enthalten beide Signale 206, 215a, 215b die ZF-Frequenz f_{ZF1} und das im Wesentlichen gleiche Phasenrauschen oder Kombinationsphasenrauschen. So kann sich das Phasenrauschen gegenseitig im Wesentlichen aufheben.

Andererseits kann ein mit f_{ZF1} geträgertes Empfangssigenal 401 mit einem zweiten Referenzsignal 405 mit der zweiten Zwischenfrequenz f_{Ref2} gemischt werden, wodurch sich ein mit einer zweiten Zwischenfrequenz f_{ZF2} geträgertes Empfangssignal 206' erzeugen lässt. Dieses Empfangssignal enthält dann eine im Wesentlichen exakte ZF (Zwischenfrequenz) f_{ZF2}. Auch bei dem Mischen hebt sich das in der Zwischenfrequenz f_{ZF1} enthaltene Phasenrauschen oder das enthaltene Kombinations-Phasenrauschen auf.

In einer ersten Stufe 101, 107, in einem Analog-Teil 101, 107 oder in einem HF (Hochfrequenz) Teil 101, 107 einer Schaltung mag ein Signal auf eine Zwischenfrequenz f_{ZF1} umgesetzt werden und so der Einfluss und insbesondere Störungen einer Sendefrequenz f_{Mod} im Wesentlichen aus dem Signal eliminiert werden. Das mit f_{ZF1} geträgerte Empfangssignal 206 mag aber immer noch Störungen enthalten, die beim Generieren der Zwischenfrequenz f_{ZF1} aufgetreten sind.

Diese Fehler des Zwischenfrequenzsignals 206 können im Wesentlichen entfernt werden, indem in einem Beispiel das Zwischenfrequenzsignal 206 mit einem Abtastsignal 215a, 215b abgetastet wird, das die im Wesentlichen gleichen Fehler wie das Zwischenfrequenzsignal 206 enthält.

Die Fehler des Zwischenfrequenzsignals 401 können im Wesentlichen auch entfernt werden, indem in einem anderen Beispiel das Zwischenfrequenzsignal 401 auf ein weiteres Zwischenfrequenzsignal 406, 206' oder zweites Zwischenfrequenz-Empfangssignal 406, 206' gemischt wird. Bei dieser Mischung erhält der Mischer M4 das Zwischenfrequenzsignal 401 und ein weiteres Eingangssignal 405, welches die erste Zwischenfrequenz f_{ZF1} und die weitere Zwischenfrequenz f_{ZF2} aufweist. Die weitere Zwischenfrequenz f_{ZF2} liegt in einem so niedrigen Frequenzbereich, dass sie mit einfachen Komponenten abgetastet werden kann.

Es mag also ein Verfahren und eine Vorrichtung zum Bereitstellen eines Reflexionssignals angegeben werden, wobei ein erstes Referenzsignal 221 u.a. durch Mischen der zwei Ausgangssignale von zwei Frequenzgeneratoren PLL1, PLL2 erzeugt wird und wobei das erste Referenzsignal 221 zur Demodulation M2 eines Empfangssignals RX und zur Generierung des Abtasttaktes oder zur Erzeugung eines zweiten Referenzsignals 405 zur weiteren Demodulation M4 des Empfangssignals dient.

Es mag in einem Beispiel das erste Zwischenfrequenz-Empfangssignal 206 zusammen mit dem Abtasttakt 215a, 215b an eine nachfolgende Signalvorverarbeitung bereitgestellt werden, jeweils aufweisend die erste Zwischenfrequenz f_{ZF1}. Das Zwischenfrequenz-Empfangssignal 206 kann an einem Ausgang und das Taktsignal 215a, 215b mit dem Ausgangstakt an zwei separaten Ausgängen bereitgestellt werden.

In einem anderen Beispiel mag ein zweites Zwischenfrequenz-Empfangssignal 406, 206' zusammen mit einem Takt 404 zur Taktung der digitalen Signalvorverarbeitung 207' bereitgestellt werden, welcher die Frequenz f_{Q} aufweisen kann. Insbesondere kann der Abtasttakt durch Teilung des Taktsignals 404 in der Signalvorverarbeitung 207' erzeugt werden. Mit dem Takt 404 kann auch die zweite Zwischenfrequenz f_{ZF2} durch Teilung 402 um den Faktor M erzeugt werden. Das zweite Zwischenfrequenz-Empfangssignal 406, 206' und das Taktsignal 404 können jeweils an einem Ausgang bereitgestellt werden. Die zweite Zwischenfrequenz f_{ZF2} kann an zwei Ausgängen 403a, 403b bereitgestellt werden.

Ergänzend ist darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Bereitstellen eines Reflexionssignals als erstes Zwischenfrequenzsignal (206, 401), aufweisend:
Erzeugen eines Sendesignals (220, TX) aufweisend eine Sendefrequenz (^{f}Mod);
Erzeugen eines ersten Referenzsignals (221) aufweisend eine erste Referenzfrequenz (f_{Ref1});
wobei die erste Referenzfrequenz (f_{Ref1}) gegenüber der Sendefrequenz (f_{Mod}) um eine vorgebbare erste Zwischenfrequenz (f_{ZF1}) verschoben ist;
wobei die vorgebbare erste Zwischenfrequenz (213, f_{ZF1}) durch Mischen (M1) der Sendefrequenz (f_{Mod}) und der erzeugten ersten Referenzfrequenz (f_{Ref1}) generiert wird;
Senden des Sendesignals (220, TX) in Richtung eines Messobjekts (104);
Empfangen eines an dem Messobjekt (104) reflektierten Empfangssignals (Rx);
Erzeugen eines ersten Zwischenfrequenzsignals (206, 401) durch Mischen (M2) des Empfangssignals (RX) mit dem ersten Referenzsignal (221);
Bereitstellen des ersten Zwischenfrequenzsignals (206, 401).

2. Verfahren nach Anspruch 1, ferner aufweisend:
Erzeugen eines zweiten Referenzsignals (405) aufweisend eine zweite Referenzfrequenz (f_{Ref2}), wobei die zweite Referenzfrequenz (f_{Ref2}) gegenüber der ersten Zwischenfrequenz (f_{ZF1}) um eine zweite Zwischenfrequenz (f_{ZF2}) verschoben ist;
wobei die zweite Zwischenfrequenz (f_{ZF2}) kleiner als oder größer als die erste Zwischenfrequenz (f_{ZF1}) ist;
Erzeugen eines zweiten Zwischenfrequenzsignals (206') durch Mischen (M4) des ersten Zwischenfrequenzsignals (401) mit dem zweiten Referenzsignal (405);
Bereitstellen des zweiten Zwischenfrequenzsignals (206').

3. Verfahren nach einem der Ansprüche 1 bis 2, ferner aufweisend:
Ermitteln eines Taktsignals (215a, 215b, 404) für eine Signalvorverarbeitung (207) derart, dass eine Taktsignal-Frequenz (f_{S}) entweder größer als oder gleich zumindest eine/einer der ersten Zwischenfrequenz (f_{ZF1}) und der zweiten Zwischenfrequenz (f_{ZF2}) ist.

4. Verfahren nach einem der Ansprüche 1 bis 3, wobei zumindest ein Signal ausgewählt aus der Gruppe der Signale bestehend aus Sendesignal (220), erstem Referenzsignal (221), zweitem Zwischenfrequenzsignal (403a, 403b, 206) und Taktsignal (215a, 215b, 404) von einem im Wesentlichen konstanten Frequenzgenerator (208, 209) abhängt.

5. Verfahren nach einem der Ansprüche 1 bis 4, wobei zumindest ein Signal ausgewählt aus der Gruppe der Signale bestehend aus Sendesignal (TX), erstem Referenzsignal (221) und Empfangssignal (RX, 218) ein Ultra Breitband Signal ist.

6. Verfahren nach Anspruch 5, wobei das Ultra Breitband Signal einen Frequenzbereich aufweist ausgewählt aus der Gruppe der Frequenzbereiche bestehend aus
einem Frequenzbereich im Mega Hertz Bereich;
einem Frequenzbereich im Tera Hertz Bereich;
einem Frequenzbereich im Giga Hertz Bereich;
einem Frequenzbereich mit einer Bandbreite von mindestens 20% des arithmetischen Mittelwertes von einer unteren und einer oberen Grenzfrequenz des genutzten Frequenzbandes; und
einem von einer Regulierungsbehörde für Ultra Breitband Anwendungen festgelegten Frequenzbereich.

7. Verfahren nach einem der Ansprüche 1 bis 6, wobei das Sendesignal (TX) ein Signal ist ausgewählt aus der Gruppe der Signale bestehend aus
einer stufenförmigen Rampe;
einem Puls;
einem Frequenz Moduliertem Kontinuierlichem Wellen Signal; und
einem Pseudo Rauschen.

8. Vorrichtung (100) zum Bereitstellen eines Reflexionssignals als Reflexionssignal, aufweisend:
eine Sendesignal-Einrichtung (101);
eine Referenzsignal-Einrichtung (107);
eine Sende-Einrichtung (103);
eine Empfangs-Einrichtung (103);
eine erste Misch-Einrichtung (M1);
eine zweite Misch-Einrichtung (M2);
wobei die Sendesignal-Einrichtung (101) zum Erzeugen eines Sendesignals (220, TX) aufweisend eine Sendefrequenz (f_{Mod}) eingerichtet ist;
wobei die Referenzsignal-Einrichtung (107) zum Erzeugen eines ersten Referenzsignals (221) aufweisend eine erste Referenzfrequenz (f_{Ref1}) eingerichtet ist;
wobei die erste Referenzfrequenz (f_{Ref1}) gegenüber der Sendefrequenz (f_{Mod}) um eine vorgebbare erste Zwischenfrequenz (f_{ZF1}) verschoben ist;
wobei die vorgebbare erste Zwischenfrequenz (f_{ZF1}) durch Mischen (M1) der Sendefrequenz (f_{Mod}) und der erzeugten ersten Referenzfrequenz (f_{Ref1}) in der ersten Misch-Einrichtung (M1) generiert wird;
wobei die Sende Einrichtung (103) zum Senden des Sendesignals (220, TX) in Richtung eines Messobjekts (104) eingerichtet ist;
wobei die Empfangs-Einrichtung (103) zum Empfangen eines an dem Messobjekt (104) reflektierten Empfangssignals (RX) eingerichtet ist;
wobei die zweite Misch-Einrichtung (M2) zum Erzeugen eines ersten Zwischenfrequenzsignals (206, 401) durch Mischen (M2) des Empfangssignals (RX) mit dem Referenzsignal (221) eingerichtet ist; und
wobei die zweite Misch-Einrichtung (M2) zum Bereitstellen des ersten Zwischenfrequenzsignals (206, 401) eingerichtet ist.

9. Vorrichtung (100) nach Anspruch 8, aufweisend:
eine Einrichtung zum Erzeugen eines zweiten Referenzsignals (405) aufweisend eine zweite Referenzfrequenz (f_{Ref2}),
wobei die zweite Referenzfrequenz (f_{Ref2}) gegenüber der ersten Zwischenfrequenz (f_{ZF1}) um eine zweite Zwischenfrequenz (f_{ZF2}) verschoben ist.

10. Vorrichtung (100) nach Anspruch 9, aufweisend:
eine dritte Misch-Einrichtung (M4),
wobei die dritte Misch-Einrichtung (M4) zum Erzeugen eines zweiten Zwischenfrequenzsignals (206', 406) durch Mischen (M4) des ersten Zwischenfrequenzsignals (401) mit dem zweiten Referenzsignal (405) eingerichtet ist;
wobei die dritte Misch-Einrichtung (M4) zum Bereitstellen des zweiten Zwischenfrequenzsignals (206', 406) eingerichtet ist, so dass das zweite Zwischenfrequenzsignal (206', 406) die zweite Zwischenfrequenz (f_{ZF2}) aufweist.

11. Vorrichtung (100) nach Anspruch 8 bis 10, wobei die Vorrichtung als integrierter Schaltkreis, als FPGA, als ASIC und/oder als ein Filter ausgeführt ist.

12. Vorrichtung (100) nach Anspruch 8 bis 11, wobei die Vorrichtung zumindest ein Gerät ist, ausgewählt aus der Gruppe der Geräte bestehend aus
einem Wandfeuchtemessgerät,
einer Kreissäge;
einer Stichsäge;
einem Trennschleifer;
einem Rasenmäher;
einer Heckenschere;
einem Häcksler;
einem Kraftstoff-Sensor;
einem Fehlbetankungssensor;
einem Materialerkennungsgerät; und
einem Leitungsdetektor.

13. Vorrichtung (100) nach einem der Ansprüche 8 bis 12, wobei die Vorrichtung als Mehrkanal-Messsystem eingerichtet ist.
